# EUROPEAN PATENT APPLICATION

(11) **EP 2 755 172 A1**
(43) Date of publication of application: **16.07.2014**
(21) Application number: 13290005.1
(22) Date of filing: 11.01.2013
(51) Int. Cl.: G06Q 10/02, G06Q 50/14

(54) **Method and computer implemented system providing automatic electronic miscellaneous document reconciliation**

(71) Applicant: Amadeus S.A.S., 06410 Biot (FR)
(72) Inventor: Daouk, Carine, 06600 Antibes (FR); Poirrier, Céline, 84810 Aubignan (FR); Samak, David, 06000 Nice (FR); Adam, Marc, 06560 Valbonne (FR); Torrenti, Matthieu, 06560 Valbonne (FR)
(74) Representative: Samson & Partner

(57) **Abstract**

A method includes, in response to an event that results in a modification of a Passenger Name Record (PNR), receiving an image of the modified PNR; receiving an image of a corresponding Electronic Miscellaneous Documents (EMD); establishing a matrix of links between PNR services and EMD coupons; searching for matches between orphan PNR services and orphan EMD coupons; automatically Reconciling the PNR, EMD and an Electronic Ticket (E-Ticket) by Re-associating orphan PNR services with matching EMD coupons and an EMD coupon with a corresponding E-Ticket coupon; and disassociating any unmatched EMD coupons from an associated E-Ticket coupon. Also disclosed are computer program products and data processing systems to implement the method. A system to perform an EMD reconciliation service (ERS) is also disclosed. Also disclosed is a function or system configured to automatically respond to one or both of a manually entered EMD reference and a manually entered E-Ticket reference to check a validity of the reference and to examine a corresponding PNR to locate a match.

## Description

### TECHNICAL FIELD:

The exemplary and non-limiting embodiments of this invention relate generally to computerized travel transactions and, more specifically, to methods, computer software programs and systems for automatically keeping travel data consistent between a Passenger Name Record (PNR) and corresponding Electronic Miscellaneous Documents (EMD) that are held on different databases.

### BACKGROUND:

In accordance with an IATA (International Air Transport Association) mandate for migration from paper documents to electronic documents, the Electronic Ticket (E-Ticket) and the Electronic Miscellaneous Documents (EMD) have become industry standards for electronic records. An E-Ticket is defined for the issuance of a seat on a flight for an aircraft of an airline (a carrier). An EMD-A (discussed below) is defined for the issuance of services related to the travel (e.g., excess baggage or premium seats, etc.) An EMD-S (also discussed below) can be issued for non-travel related services (e.g., a promotional item).

Once a reservation is made, an E-Ticket or an EMD only exists as a digital record in the computers of the corresponding airline or in the computers of a global distribution system (GDS). One well-known GDS is AMADEUS, a worldwide service provider for the travel industry and airline companies.

An E-Ticket is thus a paperless electronic document that exists as a file in a computer and that is used to represent the purchase of a seat on the flight as well as to track the life of the sale until the service is delivered to the customer. The purchase itself can be made, for example, by a traveller in person, or through an on-line transaction, or through a telephone call. The EMD instead represents the purchase of a service which could be seat-related (e.g., purchase of a premium seat) but is not necessarily seat-related (e.g. purchase of excess baggage).

An E-Ticket generally takes the form of a confirmation number assigned to the passenger along with the flight number(s) and operating airline, date(s), booking class designator (also referred to by IATA as a Reservation Booking Indicator (RBD)), departure location(s) and destination location(s) of the passenger's trip.

An EMD generally takes the form of a confirmation number assigned to the passenger along with a service description code such as the Operating airline, the service description represented by a Reason for Issuance Code (RFIC) and Reason for Issuance Sub Code (RFISC), as well as departure location(s) and destination (locations) of the passenger's trip.
Among many alternative possibilities this essential information can be printed, e-mailed, and/or sent to a mobile device (e.g., the passenger's phone or tablet computer). Hence, when checking in at an airport point of departure the passenger has simply to present positive identification to obtain a boarding pass and have any luggage checked in.

The Electronic Miscellaneous Documents can be considered as falling into two basic types according to their behaviour and usage. These types include an Electronic Miscellaneous Document - Associated (EMD-A), which is an EMD issued for the collection of miscellaneous charges (including excess baggage) that are to be lifted with an E-Ticket flight coupon(s); and an Electronic Miscellaneous Document - Stand-Alone (EMD-S), which is an EMD issued for residual value or the collection of miscellaneous charges that are not to be lifted with an E-Ticket flight coupon(s).

The association between EMD-A service coupon(s) and the corresponding E-Ticket flight coupon(s) implies that both the EMD-A service coupon(s) and the corresponding E-Ticket flight coupon(s) remain synchronized.

### SUMMARY

In accordance with a first aspect of the embodiments of this invention there is provided a computer implemented method to process travel-related documents. The method comprises, in response to an event that results in a modification of a Passenger Name Record (PNR), receiving an image of the modified PNR; receiving an image of a corresponding Electronic Miscellaneous Documents (EMD); establishing a matrix of links between PNR services and EMD coupons; searching for matches between orphan PNR services and orphan EMD coupons; automatically Reconciling the PNR, EMD and an Electronic Ticket (E-Ticket) by Re-associating orphan PNR services with matching EMD coupons and an EMD coupon with a corresponding E-Ticket coupon; and disassociating any unmatched EMD coupons from an associated E-Ticket coupon.

In accordance with another aspect of the embodiments of this invention there is provided a data processing system that comprises at least one processor and at least memory that stores computer program code. The memory and computer program code are configured to, with the at last one processor, cause the data processing system to respond to an event that results in a modification of a Passenger Name Record (PNR) by receiving an image of the modified PNR and receiving an image of a corresponding Electronic Miscellaneous Documents (EMD); to establish a matrix of links between PNR services and EMD coupons; to search for matches between orphan PNR services and orphan EMD coupons; to automatically Reconcile the PNR, EMD and an Electronic Ticket (E-Ticket) by Re-associating orphan PNR services with matching EMD coupons and an EMD coupon with a corresponding E-Ticket coupon; and to Disassociate any unmatched EMD coupons from an associated E-Ticket coupon.

In accordance with another aspect of the embodiments of the invention, a non-transitory computer-readable medium is disclosed that contains software program instructions, where execution of the software program instructions by at least one data processor results in performance of operations that comprise execution of the method.

In accordance with a still further aspect of the embodiments of this invention there is provided a system to perform an Electronic Miscellaneous Documents (EMD) reconciliation service (ERS). The system comprises a Publisher configured to forward images of passenger name records (PNR); an EMD server configured to send EMD images and to Re-associate or Dis-associate EMD coupons with E-Ticket coupons; a Pricing Engine configured to compute if an EMD coupon is eligible for automatic Re-association according to initial pricing conditions; an EMD Reconciliation Engine (ERE) configured to receive the PNR images, request and receive the EMD images from the EMD server, match PNR services with EMD coupons using a link matrix, automatically Re-associate orphan PNR services with matching EMD coupon and automatically Re-associate matching EMD coupons with corresponding E-Ticket coupons, and automatically Dis-associate unmatched EMD coupons from associated E-Ticket coupons.

### BRIEF DESCRIPTION OF THE DRAWINGS

The foregoing and other aspects of the exemplary embodiments of this invention are made more evident in the following Detailed Description, when read in conjunction with the attached Drawing Figures, wherein:
Figure 1 shows a conventional computing environment having an end user terminal, a Reservation platform and a Ticketing platform and their associated databases.
Figure 2 depicts a global architecture of an EMD Reconciliation Service (ERS) according to embodiments of this invention.
Figure 3 is a logic flow diagram that illustrates the operation of a method, and a result of execution of computer program instructions, by an EMD Reconciliation Engine (ERE) of Figure 2 in accordance with the exemplary embodiments of this invention.
Figure 4 shows various types of link statuses considered by an ERE link matrix component shown in Figure 2.
Figures 5-9 present examples of a PNR, an EMD, an E-Ticket and the associations links between PNR segments, PNR services, EMD coupons and E-Ticket coupons. These examples are useful when explaining the Search for Matching Services/Coupons step of Figure 3. In Figures 5-9, as well as Figures 11, 12 and 13, the abbreviation 'SN/N' represents 'Surname/Name'.
Figure 10 is a logic flow diagram that illustrates the operation of a method, and a result of execution of computer program instructions, by the EMD Reconciliation Engine (ERE) of Figure 2 during an Automatic Re-association process in accordance with the exemplary embodiments of this invention.
Figure 11 shows a result of Automatic Re-association.
Figure 12 shows a result of Automatic Disassociation.
Figures 13A-13D, collectively referred to as Figure 13,depict a further example of the use and operation of the embodiments of this invention, more specifically Figures 13A-13D show another example of a dis-association event and the automatic resolution of the dis-association event in accordance with embodiments of this invention.
Figures 14A-14C provide exemplary workflow diagrams that illustrate the operation of the embodiments of this invention.
Figure 15 is a simplified system-level block diagram showing various components that are suitable for implementing the exemplary embodiments of this invention.
Figure 16 is an exemplary logic flow diagram that depicts a trigger for an enhanced FHD process in accordance with further embodiments of this invention.
Figure 17 shows a global view of a multi-phase process to perform manual entry to reference an EMD in a PNR with coupon/segment association.
Figure 18 shows a flow diagram of Basic Checks (Phase A in Figure 17) when a service/coupon link is provided.
Figure 19 shows a non-limiting example of a flow of checks during Phase B in Figure 17.
Figure 20A shows an example of a Basic FHD in a PNR, while Figure 20B shows an example of an Enhanced FHD in a PNR.
Figure 21 shows a processing flow during the Phase C of Figure 17 for performing Fare Condition checks (third level checks).
Figure 22 is an exemplary logic flow diagram that depicts a trigger for an enhanced FHE process in accordance with the further embodiments of this invention.
Figure 23 is an exemplary logic flow diagram that depicts a flow of checks with flight/coupon link provided (second level of checks).
Figure 24 illustrates a flow diagram that provides a technical description of an EMD reference update.

### DETAILED DESCRIPTION

### 1. Introduction

By way of introduction, in the travel industry a sale of a travel product produces different types of electronic records. These include a Reservation / Detailed estimate used across Inventory Systems and Departure Control Systems (DCS), and Sale Contracts that are dynamic documents that may evolve until delivery of the product. These documents are typically handled by distributed systems with separate control flows that can result in de-synchronization between documents due to, for example, operational needs and/or due to a customer request. Any such de-synchronization between documents must be resolved by a point in time when the product is actually delivered to the customer.

In one non-limiting aspect thereof the exemplary embodiments of this invention automate the resolution of de-synchronization events.

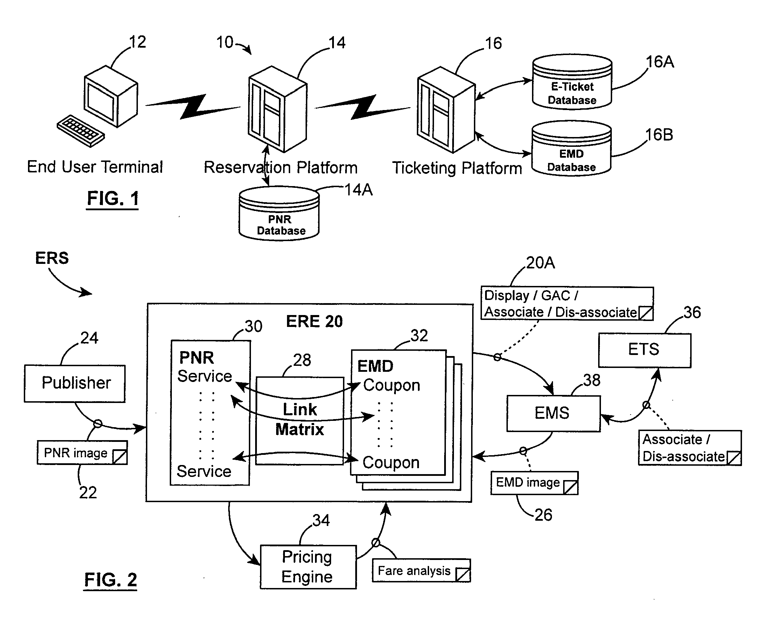

To provide additional background information regarding this invention reference is made to Figure 1. Figure 1 shows a computing environment 10 having an end user terminal 12, a Reservation platform 14 and a Ticketing platform 16 (e.g., an Electronic Ticketing platform). The end user terminal 12 could be associated with, for example, a travel agency or a website merchant. The Reservation platform 14 has an associated PNR Database (DB) 14A. The Ticketing platform 16 (which in practice could be divided into several parts such as an EMD platform and an E-Ticket platform) has an associated E-Ticket DB 16A and an associated EMD DB16B (which in practice could be embodied in a single database). Platforms 14 and 16 can be implemented using any type of suitable data processors/data processing systems. Each includes at least one data processor that executes computer program code (software). Interconnections between the platforms 14, 16, between the Reservation platform 14 and the user terminal 12, and between the platforms and their respective Databases can be achieved using any type of suitable wired and /or wireless networks and interfaces. That is, communications between the various components, i.e., the Reservation platform 14, the Ticketing platform 16 and the end-users or travel agencies can be achieved using traditional means and protocols through a mix of public and private networks including the GDS private network(s) and the Internet.

In the system 10 a PNR is completed and the agent triggers the creation of a corresponding E-Ticket and an EMD on separate systems (or on the same system, depending on the architecture), For example, the E-Ticket Database 16A is used for the E-Ticket and the EMD Database 16B is used for the EMD. In this non-limiting example the E-Ticket and the EMD are stored in their dedicated databases 16A, 16B under the control of the Electronic Ticketing platform 16 from where they can be retrieved to be consulted when necessary by a travel agent who has issued an EMD or an E-Ticket or by the end-user of a corresponding online travel application and, in any case, when the passenger checks in at the airport.

In the general case of a reservation there can be more than one flight segment per PNR, where a flight segment is composed of one or more legs that share the same commercial transportation service (such as a flight) number, and where a 'leg' is a non-stop journey between a "departure" station and an "arrival" station. Each of the flight segments is then associated with a corresponding coupon when the E-Ticket is created. This applies as well for services reservations linked to flight segments, i.e., each service reservation is associated with a corresponding coupon when the EMD is created. If services issued are linked to the flight coupon, then the E-Ticket and EMD coupons are also associated together.

### 2. Problem Statement

However, a problem that arises relates to the fact that once the E-Ticket and the EMD are created any change made to the flight details or services details of the reservation in the PNR does not automatically trigger a corresponding change of the E-Ticket and the EMD. While there are some procedures available to automatically synchronize an E-Ticket with changes made to a flight reservation, at present there is no automatic process to automatically synchronize EMD coupons with services reservations, and there is no automatic process to update the association status between EMD-A coupons and E-Ticket coupons. The exemplary embodiments of this invention address these issues and provide novel solutions to these problems.

In a conventional case if a passenger has requested the assistance of a professional in a travel agency it is the responsibility of the travel agent to update manually the EMD with the requested changes. Otherwise, the document and the reservation become de-synchronized, and the service and its corresponding EMD coupon are considered as orphaned, i.e., the service is no longer associated with a coupon. De-synchronization typically requires costly human intervention and can adversely impair check in and boarding procedures, thus greatly offsetting the advantage of having implemented the EMD.

De-synchronization may also result in a loss of revenue for the airline or a loss of service for the customer when the E-Ticket flight coupon is lifted, and the association between an EMD-A value coupon(s) and the corresponding E-Ticket is not properly set.

Changes to a reservation can be requested by the passenger. These are voluntary changes, as opposed to involuntary changes initiated by the airline or travel agent. Involuntary changes are, for example, the result of a flight cancellation or of schedule changes. Depending on what commercial policy is applied airlines and travel providers may require charging penalties for voluntary changes according to a set of predefined calculation rules. The verification of the fare conditions must also be triggered manually prior to the updating of the EMD and E-Ticket. Moreover, because this is not mandatory, if the travel agent does not launch the corresponding process, the airline will not collect any fee for the reservation change thus impacting airline revenues.

The benefits of electronic ticketing, which are far less costly for the travel provider than conventional ticketing procedures, can be fully realized only if the electronic ticketing process can be carried out without impairment.

It is therefore one overall objective of the invention to have all passengers travel-ready at check in time regardless of changes that the passengers or airline agents may have made to their travel plans, thus requiring little or no human intervention at check in time.

It is also a specific objective of the invention to address and solve the lack of automatic synchronization between a PNR, an EMD and an E-Ticket.

The non-limiting examples of embodiments of this invention provide a method to maintain travel data consistency between the database 14A of PNR(s) including travel segments and services, the database 16B of EMD(s) including service coupons, and the database 16A of E-Tickets including travel coupons.

### 3. Practical Example-Context

As was discussed above, different electronic records are generated when selling Flights and Services to a customer. These records include the PNR which contains the detailed description of flights and services bookings, one (or several) E-Ticket(s) representing the sale contract(s) for the flight(s), and one (or several) EMD(s) representing the sale contract(s) for the services. All of these documents are linked together, however the PNR, EMD, and E-Ticket may become de-synchronized for any of a number of reasons, e.g., if a travel agent modifies the itinerary or service booking in the PNR or upon a re-accommodation or disruption of flight schedules.

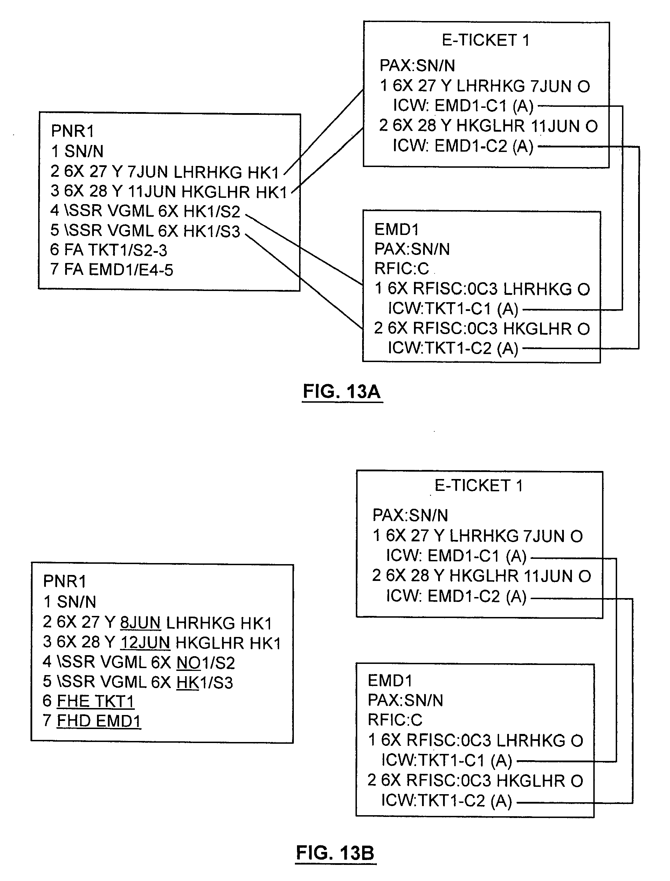

Figures 13A-13D show an example of a Dis-association event and the automatic resolution of the Dis-association event in accordance with embodiments of this invention.

### 4. Practical Example-Initial State

Figure 13A shows an example where Flights segments and Services are sold to a customer and the PNR, E-Ticket and EMD are generated. In Figure 13A the FA element represents an association between the PNR flight elements and the E-Ticket coupons and an association between the PNR service elements and the EMD coupons. The EMD coupons are associated to the corresponding E-Ticket coupons. Once the service is delivered, the DCS (Departure Control System) sets the E-Ticket coupon to Flown and this status is automatically propagated to the associated EMD coupons.

### 5. Practical Example-After Rebooking

Figure 13B shows an example where the Flights segments are rebooked to different dates (PNR index 2&3) and Services are re-requested for the new flights (PNR index 4 is denied, PNR index 5 is accepted).

### 6. Practical Example-After E-Ticket Revalidation

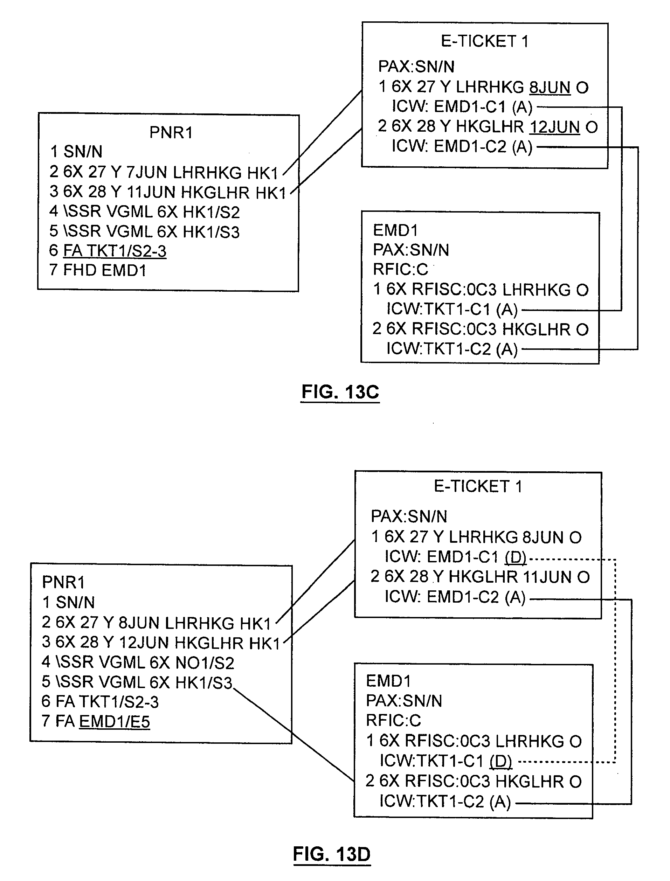

Figure 13C shows an example where the E-Ticket is re-validated, however, the Services remain de-synchronized from the EMD coupons while the E-Ticket coupons remain associated with the EMD coupon. Note in this regard that the revalidation may either be initiated manually by an Agent or automatically by the GDS. The consequences of this can be as follows: the Service is denied (PNR index 4) and the customer may lose the EMD coupon whereas the service is not provided, or the Service is accepted (PNR index 5). In this latter case there, since there is no FA element in the PNR, the DCS system is not informed that the Service has a valid Document and manual processing is necessary to identify this document at check-in time. As a result the customer (passenger) is not able to self check-in.

### 7. Practical Example-After Automatic Reconciliation

Figure 13D shows an example of the Automatic EMD Reconciliation in accordance with the embodiments of this invention. In one case the Service is denied (PNR index 4) and the EMD coupon (EMD index 1) is dis-associated from the E-Ticket coupon (TKT index 1). In another case the Service is granted (PNR index 5) and the EMD coupon (EMD index 2) is re-associated with Service (PNR Index 5). The FA element is added (PNR index 7), and association between the EMD (EMD index 2) coupon and the E-Ticket coupon (TKT index 2) is maintained.

### 8. ERS Description

Referring to Figure 2, a global EMD Reconciliation Service (ERS) architecture is presented. The ERS architecture includes the EMD Reconciliation Engine (ERE) 20 according to the invention and the interactions with external components such as the publisher 24, the EMD server or EMS 38 and the Pricing Engine 34.

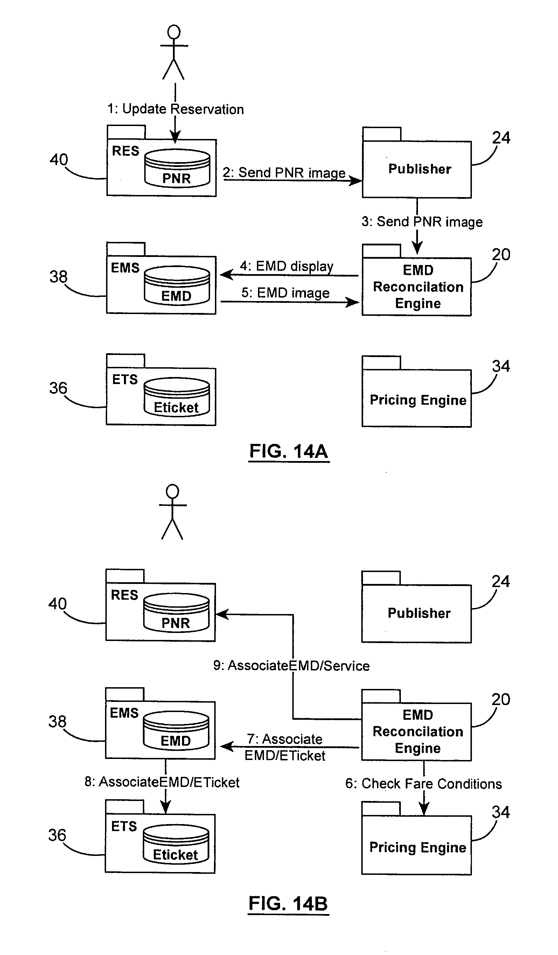

A brief description of Figure 2 is now provided so as to provide an overview of the exemplary embodiments of this invention. Whenever a change of reservation is made in PNR(s), an EMD Reconciliation Engine (ERE) 20 (also referred to below in association with Figures 14A-14C) receives images 22 of updated PNR(s) from a Publisher 24 of the updated PNRs. Corresponding EMD images 26 are requested by the ERE 20 and received from the corresponding databases. The ERE 20 then analyses the PNR images 22 and EMD images 26 and establishes a matrix of links 28 between PNR services 30 and EMD service coupons 32.

The ERE 20 then proceeds with reconciliation measures:
- When a match is found between orphan EMD coupons and orphan PNR services; for voluntary changes the ERE 20 requests a Pricing Engine 34 to compute if the EMD coupons 32 are eligible for reconciliation on the basis of a predefined set of pricing rules. The ERE 20 then requests the association of the EMD orphan coupons and E-Ticket coupons corresponding to the matching PNR orphan services. The ERE 20 then requests the update of the PNR to re-associate the EMD orphan coupons with the matching PNR orphan services.
- When no match is found between orphan EMD coupons and orphan PNR services; the ERE 20 requests the disassociation of the EMD orphan coupons and associated E-Ticket coupons.

Figure 2 also shows an Electronic Ticketing Server (ETS) 36 and an Electronic Miscellaneous (Document) Server (EMS) 38 that operate with the ERE 20 to perform the method.

The exemplary embodiments of this invention will now be described in further detail. While the description includes non-limiting examples of embodiments, other embodiments are possible, and changes can be made to the examples of the embodiments described without departing from the spirit and scope of the invention.

### 9. High Level Solution: ERE Analysis

Figures 14A-14C show exemplary workflows, and refer to the components shown in Figure 2 and described above.

Figure 14A shows a Collect data and Analyze data workflow process. At (1) changes are made to the passenger's reservation at a Reservation system 40 (e.g., Reservation platform 14) having an associated PNR database. At (2) the PNR image or an image of the changes brought to the PNR is sent to the Publisher 24, and at (3) the EMD Reconciliation Engine (ERE) 20 receives the image of the updated PNR. At (4) the EMD Reconciliation Engine (ERE) 20 sends an EMD display command to the EMS 38 and at (5) the EMD Reconciliation Engine (ERE) 20 receives the EMD image. The EMD Reconciliation Engine (ERE) 20 then analyzes the PNR and EMD images for establishing a matrix of links 28 between PNR services and EMD service coupons. This step of the workflow includes a search for matches between orphan PNR services and orphan EMD coupons.

### 10. High Level Solution: Selection and Matching Algorithm(s)

In the Analysis operation of Figure 14A the EMD Reconciliation Engine (ERE) 20 executes an algorithm to search for matches between orphan EMD coupons an orphan service bookings by selecting orphan coupons and services eligible for reconciliation. This involves, for orphan PNR services, an air segment associated with the service is established with an E-Ticket coupon and service status is confirmed. For the orphan EMD coupons this involves determining if the coupon status is Open for Use ('O') or Airport control ('A'), and that the coupon is not established with a service in another PNR.

The algorithm further involves ensuring the chronological order of the coupons (within an EMD), and selecting candidate orphan coupons /services with the same city pair (or airport, depending on airline), service code and operating carrier.

The algorithm further involves selecting among remaining candidates the best choice service for a coupon.

More specifically the algorithm involves as a first operation the selecting of orphan coupons and services eligible to reconciliation. For the orphan PNR services selection the algorithm may consider, as non-limiting and exemplary cases: the airline code of the service to determine if the airline has subscribed to the reconciliation service. Alternatively the airline could be the operating airline of the segment for which the service is booked. In the codeshare scenario this would differ from the airline code of the service which is the marketing carrier. In general, the algorithm in this case can consider the operating airline of the service or even more generally a code associated with an airline involved in the service. The algorithm can further consider, as examples, if the air segment associated to the service is not past-dated, if the air segment associated to the service is established with an E-Ticket coupon, if the service is eligible for EMD, if the service is not already established with an EMD coupon and if the service status is Confirmed. For the orphan EMD coupons the algorithm may consider, in a non-limiting example, if the operating carrier of the coupon has subscribed to the reconciliation service, if the coupon status is Open for Use ('O') or Airport control ('A'), if all subsequent coupons statuses are Open for Use ('O') or Airport control ('A') or Checked-In('C');, if the coupon is not already established with a service in the PNR which status is Confirmed, and if the coupon is not established with a service in another PNR.

The algorithm involves as a second operation selecting among remaining candidates the best choice service for a coupon. If there is only one candidate service for the current orphan coupon considered by the selecting operation, and if the only one candidate service is the candidate of a single one coupon, selecting the only one candidate service, otherwise if not, searching for another coupon or coupons perfectly matching the current one candidate service and, if found, selecting the first chronologically perfectly matching coupon else, if not found, selecting the first chronological orphan coupon. As will be explained below, a 'perfect match' is obtained when the flight reservation associated with a candidate PNR Service is established with the same E-Ticket coupon as the one issued in connection with a candidate EMD coupon. However, if there are several candidate services for the current orphan coupon considered by the selecting step, and if no other coupon is matching with any of the several candidate segments then the algorithm searches for another service perfectly matching the current coupon. If one is found, the perfectly matching service is selected otherwise the first chronological orphan service is selected. Otherwise the algorithm selects the first chronological orphan service.

### 11. High Level Solution: ERE Re-association Processing

Figure 14B shows an Update Documents workflow process. If an orphan EMD coupon is found to match an orphan service booking then at (6) the EMD Reconciliation Engine (ERE) 20 verifies with the Pricing Engine 34 the eligibility for reconciliation of the EMD coupon according to fare conditions in order to prevent under-collection. This step is generally not applicable in the case of disruption or a re-accommodation. At (7) and (8) the EMD Reconciliation Engine (ERE) 20 performs the Re-association of the EMD coupon and the corresponding E-Ticket coupon in cooperation with the EMS 38 and the ETS 36. At (9) the EMD Reconciliation Engine (ERE) 20 contacts the Reservation system 40 to adding an FA element in the PNR (or updating an existing element) to show the newly re-established service/EMD coupon association.

### 12. High Level Solution: ERE Disassociation Processing

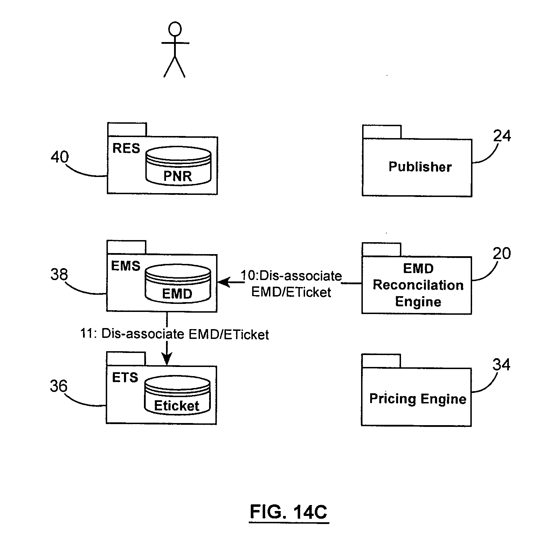

Figure 14C shows the Update Documents workflow process for the case where an orphan EMD does not match any of the PNR orphan bookings. At (10) and (11) the EMD Reconciliation Engine (ERE) 20 performs the Dis-association of the EMD coupon and the corresponding E-Ticket coupon in cooperation with the EMS 38 and the ETS 36.

### 13. A More Detailed Solution: ERE Analysis

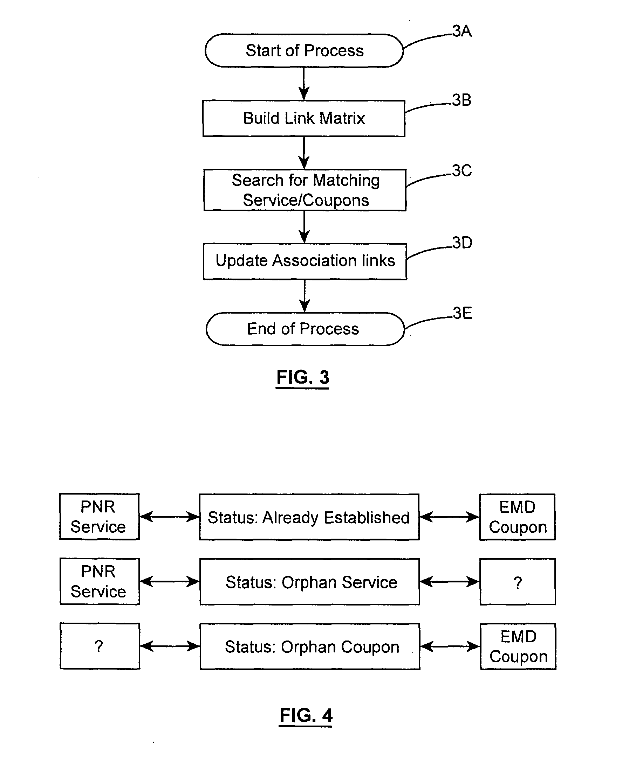

Reference is also made to Figure 3 which shows a flow chart of operations performed by the software and data processor or data processors that comprise the ERE 20 while reconciliation of orphan segments and orphan coupons are being performed for each passenger of a PNR.

At Block 3A there is a Start of Process operation or event. The EMD reconciliation process may be triggered upon different scenarios that occur, generally following an agent action either directly in the PNR or using more complex mechanisms or tools. An exemplary and non-exhaustive list of scenarios that can trigger the EMD reconciliation process performed by the ERE 20 can include a flight disruption, an inventory re-accommodation, a change of cabin configuration, any involuntary change impacting the flight and/or the services, and a voluntary change of reservation including an addition, update or cancellation of a service booking or a flight segment.

Regardless of the actual origin of the changes, the change(s) can create de-synchronization between the PNR, the EMD and the E-Ticket. An exemplary and non-exhaustive list of de-synchronization events include a service booking is added, changed or deleted, an association between a service booking and an EMD coupon has been added, updated or deleted, or an association between a flight booking and an E-Ticket coupon has been added, updated or deleted

The Publisher 24 is responsible for triggering the EMD Reconciliation Engine (ERE) 20. To this end the Publisher 24 monitors all transactions performed on the Reservation database 14A in order to detect all changes in a PNR. When a valid change is detected the Publisher 24 forwards the PNR (PNR image 22) to the ERE 20 for further analysis and reconciliation. Preferably PNR image(s) are sent using standard messages containing the PNR images 22 to the ERE 20.

At Block 3B a Build Link Matrix operation is performed. In order to determine which reconciliation actions are necessary the ERE 20 builds the matrix of links 28 between EMD coupons 32 and PNR services 30. To this end all corresponding EMDs 32 mentioned in a reservation must be retrieved. This is achieved through the sending of a corresponding request (display request 20A) to the EMS 38 that in response returns the image(s) 26 of the requested EMD(s) to the ERE 20.

Figure 4 shows various types of link statuses considered by the ERE link matrix 28. These various types of status are as follows:
Already established links - The PNR contains a valid link between a service and an EMD coupon. Such a link is usually created when the EMD is first issued or re-issued. No reconciliation action is needed to be performed by the ERE 20.
Orphan links - A de-synchronization has been introduced between previously associated coupons and services as a result of PNR changes or because the PNR contains non-ticketed services. Hence, a coupon has no corresponding service or a service has no corresponding coupon. In this case the ERE 20 operates to repair those links.

At Block 3C a Search for Matching Services/Coupons operation is performed. In this case the matching between orphan services and orphan coupons is undertaken. Various matching algorithms can however be applied depending on the particular applications of the invention.

A non-limiting example is provided of how this matching process is performed by the ERE 20 of the invention between orphan services of a PNR and the orphan coupons of corresponding Electronic Miscellaneous Document (EMD).

A first sub-step of Block 3C is to search for orphan services that are eligible for reconciliation. That is, among the orphan services in the PNR the ERE 20 selects a list of orphan services that are eligible for reconciliation. An orphan PNR service is eligible for reconciliation when it has the following (non-limiting and exemplary) characteristics:
(a) the airline code of the service (note the discussion above of the marketing carrier with respect to the 'airline code', which applies here as well) has subscribed to the reconciliation service (subscribed to use the ERE 20);
(b) an air segment associated with the service is not past-dated; and
(c) an E-Ticket coupon is established with the air segment for which the service is booked. One non-limiting and exemplary type of link between the E-Ticket coupon and the air segment is represented by a SSR TKNE (as defined in IATA standard) or a FA element (in the Amadeus PNR).

Additional exemplary characteristics can include:
(d) The service is eligible to be issued on an EMDA with the given carrier;
(e) the service is not already established with an EMD coupon; and
(f) the service status code is Confirmed.

Any service in the PNR that satisfies at least some of the above conditions is added to an Orphan Services list.

### 14. More Detailed Solution (cont.): ERE Analysis Example

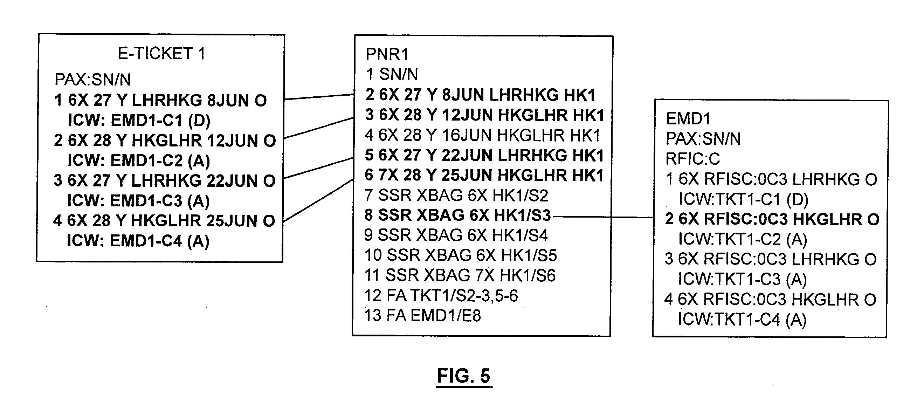

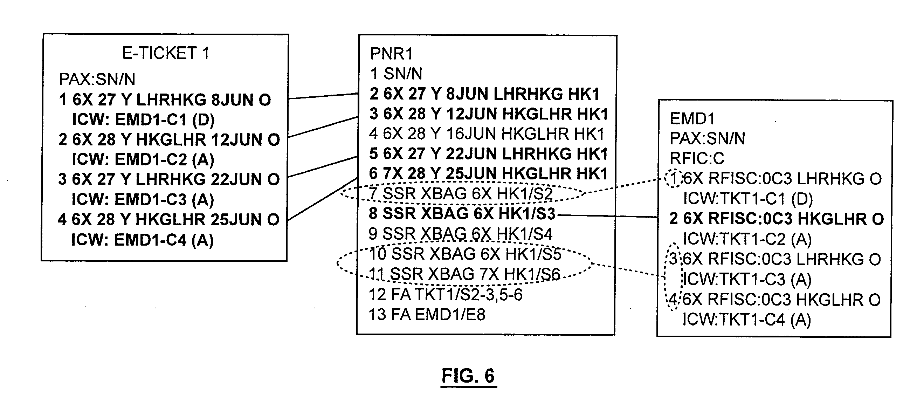

Reference can be made also to Figure 5. In Figure 5 (and Figures 6-9, 11 and 12) certain of the abbreviations that appear are defined as follows:

| | |
|---|---|
| 'A' | Coupon Status Indicating 'Airport Control' |
| 'O' | Coupon Status Indicating 'Open for Use' |
| HKG | 'Hong Kong International' Airport Code |
| ICW | In Connection With |
| LHR | 'London Heathrow' Airport Code |
| RFIC | Reason For Issuance Code |
| RFISC | Reason for Issuance Sub Code |
| SSR | Special Service Request XBAG Excess baggage |

In the example of Figure 5, the PNR #reference# contains:
Index 1: the passenger identification: name and surname;
Indexes 2 to 6: several air segments booked for the passenger at index one;
Indexes 7 to 11: several services booked for the passenger at index one and the corresponding air segment. The service booking is represented in the PNR by a SSR element including a SSR code (XBAG) to describe the nature of the service;
Index 12: exemplary representation of the link between an E-Ticket coupon and an air segment. One FA element can contain one or several links;
Index 13: exemplary representation of the link between an EMD coupon and an SSR. One FA element can contain one or several links.

The EMD #reference# contains:
The passenger name;
The service RFIC;
and the description of each coupon in the EMD.

The E-Ticket #reference# contains:
The passenger name;
and the description of each coupon in the E-Ticket.

In the non-limiting example of Figure 5 the service at index 8 is already established with the coupon at index 3, and the service at index 9 is associated with the air segment at index 4 which is not established with an E-Ticket coupon.

The result of the performance of this procedure is the generation of a list of possible candidate services which, in this case, are the services at index 7, index 10 and index 11. These are all candidate orphan services eligible for reconciliation.

A second sub-step of Block 3C is to search for orphan coupons eligible for reconciliation. This step of the EMD reconciliation process thus selects the EMD orphan coupons eligible for reconciliation.

An EMD orphan coupon is eligible for reconciliation when it has the following (non-limiting and exemplary) characteristics:
(a) the operating carrier of coupon has subscribed to use the reconciliation service;
(b) the coupon status is Open for Use ('O') or Airport Control ('A');
(c) all subsequent coupons statuses are Open for Use ('O') or Airport Control ('A') or Checked-In('C');
(d) the coupon is not already established with a service in the PNR which status is Confirmed; and
(e) the coupon is not established with a service in another PNR.

Any coupon of an EMD noted in the PNR that corresponds to all of the above conditions is added to an Orphan Coupons list.

In the example of Figure 5 the coupon at index 2 is associated with the Service at index 8. The result of this step is a list of possible candidate coupons, where the coupons at index 1, index 3 and index 4 are candidate orphan coupons eligible for reconciliation.

A third sub-step of Block 3C is a sequence check. The first step of the matching process is aimed at verifying that chronological order can be maintained after re-association of the EMD. This implies that, for a given orphan coupon, the services which would change the sequence of EMD coupons are invalidated. This is achieved as follows for each orphan coupon:
(a) find the first preceding coupon in the EMD document still associated with a service;
(b) find the first following coupon in the EMD document still associated with a service; and
(c) then, an initial list of candidate services for the current orphan coupon is strictly comprised of the services between the first preceding and the first following associated services.

In the example of Figure 6 for the coupon at index 1 there is no preceding coupon, and the following coupon at index 2 is associated with the service at index 8, which date is 12JUN. For the coupon at index 3 the preceding coupon at index 2 is associated with the service at index 8 which date is 12JUN, the following coupon at index 4 is not associated with a service and there is no following coupon. For the coupon at index 4 the preceding coupon at index 3 is not associated with a service, the preceding coupon at index 2 is associated with the service at index 8 which date is 12JUN, and there is no following coupon.

The service at index 7 is then associated with the segment at index 2 which date is 8JUN and is no longer a possible candidate for the coupons at index 3 and 4. The service at index 10 is associated with the segment at index 5 which date is 22JUN and is no longer a possible candidate for the coupon at index 1. The service at index 11 is associated with the segment at index 6 which date is 25JUN and is no longer a possible candidate for the coupon at index 1.

The result of this (computer-implemented) step is the generation of the list of possible candidates for each coupon, wherein the service at index 7 is the only possible candidate for the coupon at index 1, and the services at index 10 and index 11 are possible candidates for the coupons at index 3 and index 4.

A fourth sub-step of Block 3C is a routing check. In that the services and coupons must share the same city pairs the next step of the matching process of Block 3C of Figure 3 checks that the routes are matching. Different airports within the same city code may give a route matching depending on subscribing airline preferences. For a given coupon the ERE 20 removes services with different city pairs, if any.

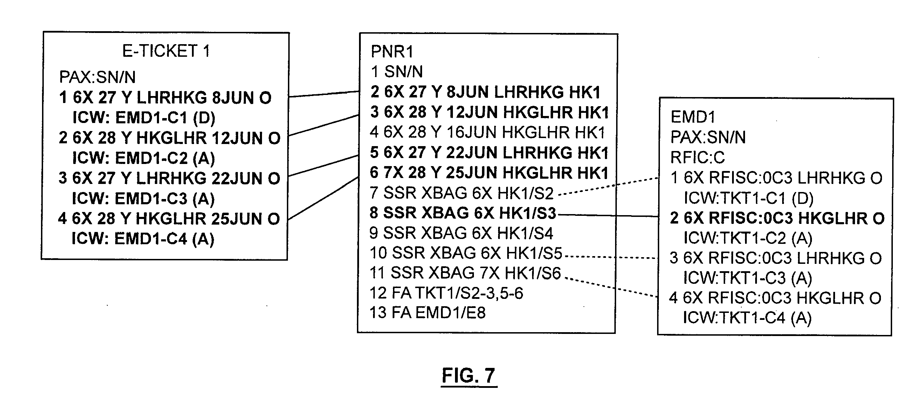

In the example shown in Figure 7 the routing of the coupon at index 1 (LHR HKG) matches the routing of the service at index 7 (LHR HKG); the routing of the coupon at index 3 (LHR HKG) matches the routing of the service at index 10 (LHR HKG), but does not match the routing of the service at index 11 (HKG LHR); and the routing of the coupon at index 4 (HKG LHR) matches the routing of the service at index 11 (HKG LHR) but does not match the routing of the service at index 10 (LHR HKG).

The result of this (computer-implemented) step is a list of possible candidates for each coupon, where the service at index 7 is the only possible candidate for coupon at index 1; the service at index 10 is the only possible candidate for the coupon at index 3; and the service at index 11 is the only possible candidate for the coupon at index 4.

A fifth sub-step of Block 3C is a service code and operating carrier code check. A matching of a coupon and a service is achieved only if their operating carrier and reason for issuance code (RFIC) and reason for issuance sub-code (RFISC) are matching. This next step of the re-association process checks these properties. For a given coupon the ERE 20 removes services with different operating carrier codes or RFIC or RFISC, if any.

A unique reason for issuance code and sub-code correspond to each Special Service Request (SSR) code used for a service booking.

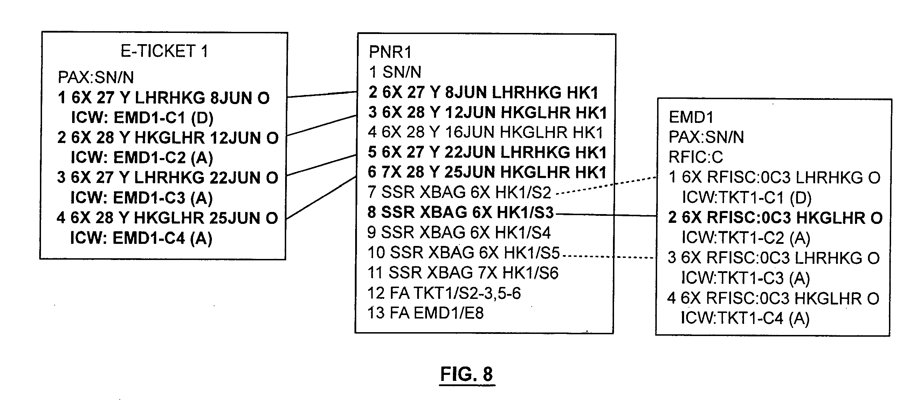

In the example shown in Figure 8 the service code of the candidate services at index 7, index 10 and index 11 (SSR code XBAG) matches the service code of the candidate coupons at index 1, index 3 and index 4 (RFIC:C/RFISC:0C3); and the airline code of the candidate services at index 7 and index 10 (6X) matches the airline code of the candidate coupons at index 1 and index 3 (6X). However the airline code of the candidate service at index 11 (7X) does not match the airline code of the candidate coupon at index 4 (6X).

The result of this (computer-implemented) step is a list of possible candidates for each coupon where the service at index 7 is the only possible candidate for the coupon at index 1; the service at index 10 is the only possible candidate for the coupon at index 3; and there is no possible service candidate remaining for the coupon at index 4.

Once the above described checking steps of the matching process of Block 3C are completed, the ERE 20 needs to select only one candidate service per orphan coupon.

To achieve this goal the ERE 20 identifies perfect matches among multiple candidate matches between services and coupons. As was noted above a perfect match is obtained when the flight reservation associated with a candidate PNR Service is established with the same E-Ticket coupon as the one issued in connection with a candidate EMD coupon.

Then, for each passenger, the ERE 20 proceeds with each remaining unassociated EMD coupon in chronological order as in the following exemplary sequence.

If the current coupon being considered has only one possible candidate service and:
(1 service - 1 coupon) if this service is the candidate of only one coupon, it is elected;
(1 service - n coupons) otherwise, the ERE 20 searches for coupons perfectly matching the current, only possible candidate service.

If such a coupon is found, the first chronologically perfectly matching coupon is selected, otherwise the first chronological coupon is selected. However, if the current coupon has several candidate services, and:
(n services - 1 coupon) if there is no other coupon matching with any of the several candidate services, then the ERE 20 searches for a service perfectly matching with the current coupon. If found, this service is selected, otherwise the first chronological service is selected;
(n services - n coupons) otherwise, the first chronological service is selected.

As a consequence of this processing step each time a service is selected, i.e., re-associated with an orphan EMD coupon, the selected service, and all preceding ones, are no longer valid candidate services and thus are not further considered.

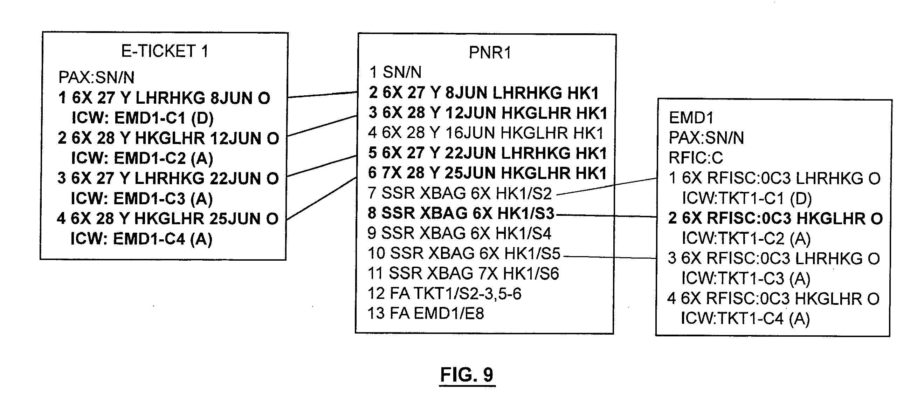

In the example shown in Figure 9 the service at index 7 (associated with TKT1-C1) is a perfect match for the coupon at index 1 (disassociated from TKT1-C1) and the service at index 10 (associated to TKT1-C3) is a perfect match for the coupon at index 3 (associated from TKT1-C3). The service at index 7 is the only possible candidate remaining for coupon 1 and the service is the candidate of only this coupon. Further, the service at index 10 is the only possible candidate remaining for coupon 3 and the service is the only candidate of this coupon.

The result of this step is a unique selected candidate for each coupon, where the candidate service at index 7 is selected for the candidate coupon at index 1, the candidate service at index 10 is selected for the candidate coupon at index 3, and no candidate service is selected for the candidate coupon at index 4.

At Block 3D of Figure 3 an operation Update Association links is performed. At the stage of the process following the execution of Block 3C the PNR has been fully analyzed and the ERE 20 is enabled to automatically apply the most appropriate actions in order to reconcile the de-synchronization. At least two distinctive processes can be optionally applied based on the results analysis described thus far.

### 15. More Detailed Solution (cont.): ERE Reassociation Processing

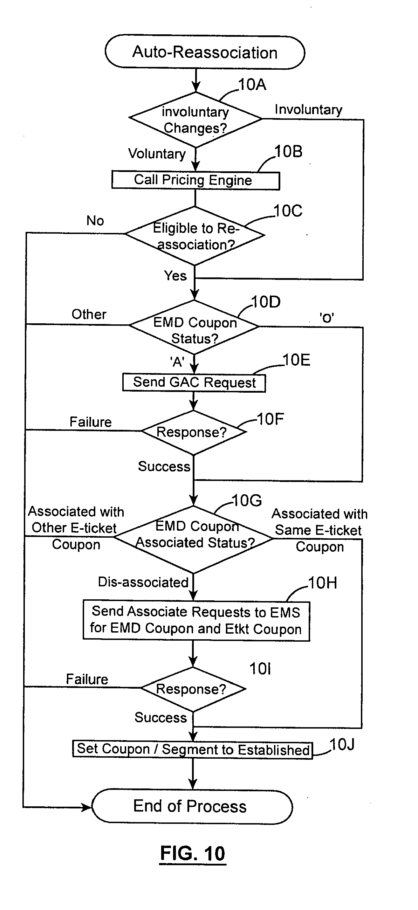

An aspect of the operation of the Update Association links process (Block 3D) is an Automatic Reassociation (Auto-Reassociation) process. The Auto-Reassociation process is attempted whenever a match is found between an orphan service and an orphan coupon as per the exemplary process described above. To this end the ERE 20 makes use of a sub-process that restores the association between a PNR service and an EMD coupon as shown in the logic flow diagram of Figure 10.

In Figure 10 a first step 10A determines if a change(s) to a reservation is a voluntary change. When the change made in the reservation is requested by the passenger, i.e., when the change is Voluntary, fare restrictions or fare differences may be applicable on the basis of a predefined set of rules. In case of Voluntary changes an EMD Reconciliation service (part of the ERE 20) requests the Pricing Engine 34 to analyze the proposed change(s) against the initial fare conditions of the document (Block 10B). A first step of the Pricing Engine 34 analysis is to determine if the EMD coupon is eligible for Reassociation (Block 10C).

In general, the result of the Pricing Engine 34 analysis may result in several possible outcomes. For example, a first outcome may be that the EMD coupon(s) are not eligible for re-association (not eligible for Reconciliation). This situation can occur when, for example, the changes proposed are not allowed according to the initial fare conditions, or when the changes proposed imply a fare difference or a penalty fee. In this case the Reconciliation process terminates (End Process in Figure 10) and manual processing may be used in order to reconcile the PNR and its documents.

A second possible outcome is that the EMD coupon(s) are eligible for reconciliation. This situation occurs when the changes proposed are allowable without any fare difference or penalty fee being needed according to the initial fare conditions. In this case the method proceeds to Block 10D and the ERE 20 proceeds with the automatic reconciliation of the changes.

The Automatic Reassociation process can next, as an optional step in the process, ensure that the EMD coupon status is still available for use. If the coupon status is airport control (or "A") the ERS 10 recalls the control of the coupon at Block 10E. This action is performed by sending a corresponding request (Get Airport Control request or GAC, see 20A in Figure 2) to the EMS 38 which returns a response at 10F indicating success or failure of the operation. In the case of involuntary changes an Involuntary Reroute Indicator is transmitted in the request.

The ERE 20 then proceeds at 10G to perform re-association of the EMD Coupon and the corresponding E-Ticket coupon, i.e., the E-Ticket coupon established with the segment associated to the elected candidate service. This action is done through the sending of a corresponding request (Associate Request, Block 10H) to the EMS 38 for the EMD coupon and the E-Ticket coupon. The EMD 38 returns a response (10I) indicating success or failure of the operation. This step may be skipped in the case where the EMD coupon and its corresponding E-Ticket coupon are already properly associated.

Finally, at 10J the Automatic Reassociation process creates a valid link between the elected candidate service and the corresponding coupon in the PNR and updates their status in the Link Matrix 28 to 'already established'.

Changes in the reservation are then committed and the reservation history is updated.

### 16. More Detailed Solution (cont.): ERE Re-association Processing Example

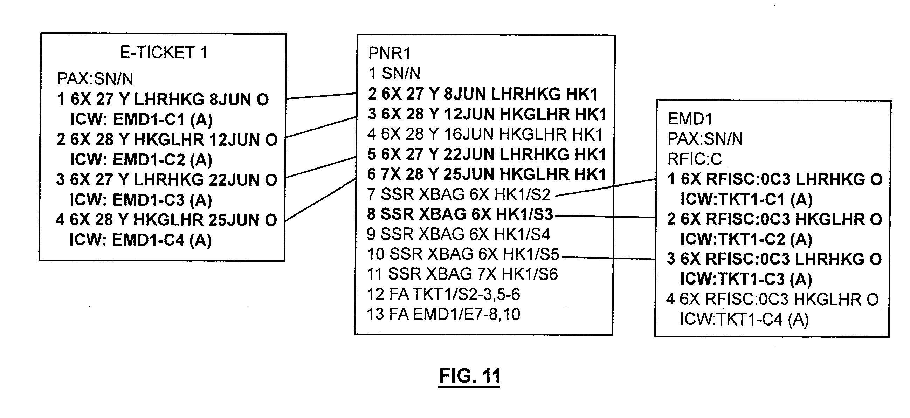

Figure 11 shows the result of the Automatic Reassociation in accordance with the previous example. In this case the Service at index 7 is established with the Coupon at index 1, and the Association status between the E-Ticket coupon at index 1 and the EMD coupon at index 1 is set to Associated (A), and the Service at index 10 is established with the Coupon at index 3.

### 17. More Detailed Solution (cont.): ERE Disassociation Processing

Discussed now in further detail is Automatic Disassociation. The Automatic Disassociation is attempted whenever an orphan coupon remains with no matching service at the termination of the search for the matching coupon/service. The ERE 20 proceeds to Automatically Disassociate those EMD coupons 32 with the respective E-Tickets coupons (if applicable). This action is performed through the sending of a corresponding request (Disassociate Request) to the EMS 38 which returns a response indicating success or failure of the operation.

### 18. More Detailed Solution (cont.): ERE Disassociation Processing Example

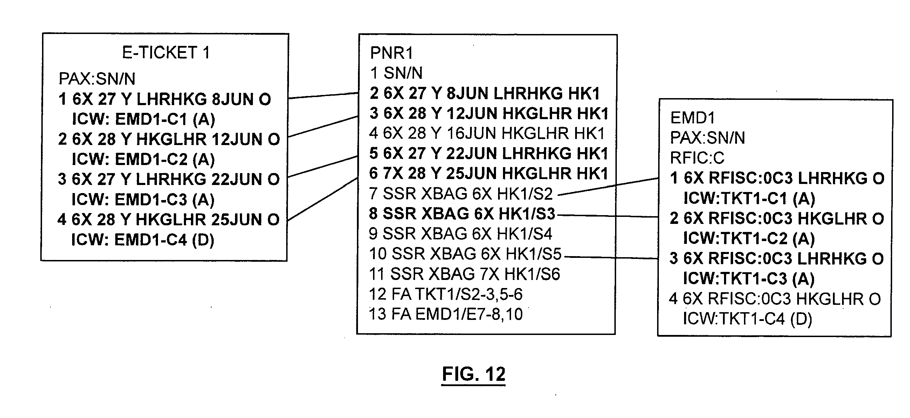

Figure 12 shows the result of the Automatic Disassociation of the previous example. The association status between E-Ticket coupon at index 4 and the EMD coupon at index 4 is set to Disassociated (D).

### 19. Representative Exemplary Advantages, Benefits and Technical Effects Realized by the Use of at Least Some of the Exemplary Embodiments of this Invention

As should be appreciated the use of at least some of the foregoing described embodiments of the invention provide a number of advantages, benefits and technical effects. For example, for a carrier, such as an airline, the revenue integrity is improved by increasing EMD usage efficiency, passenger care is improved by reducing the number of customers that need face-to-face service at the airport for ticket changes, and costs for manual processing of after-sale services are controlled. Further by example, the passengers (customers) are benefitted since they can be handled seamlessly by check-in kiosks (which may be interfaced directly or indirectly with the ESE 20) without requiring any manual action. Further, there is provided an ability to use internet check-in and self service devices instead of having to queue to change the EMD at the airport.

### 20. Examples of Implementation Alternatives

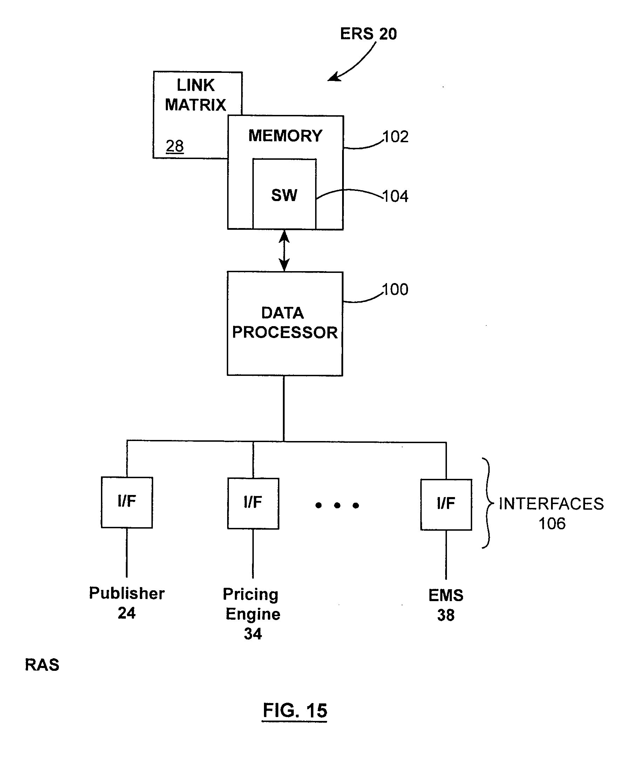

Reference is made to Figure 15 for showing a simplified system-level block diagram of a non-limiting example of various components that are suitable for implementing the exemplary embodiments of this invention. In Figure 15 the EMD Reconciliation Engine (ERE) 20 is shown to comprise a computer system that includes at least one data processor 100 having at least one associated memory 102, e.g., a non-transitory computer-readable medium such as semiconductor memory and / or disk-based memory, that stores data and software (SW) 104. The SW 104 contains program instructions that when executed by the data processor 100 results in performance of the methods, processes and algorithms as described above. The memory 102 can also store various data structures, such as the Link Matrix 28 that is created by the execution of the SW 104 as described above. Also connected with the at least one data processor 100 are a plurality of data communications interfaces 106 providing connectivity with at least the Publisher 24, the Pricing Engine 34 and the EMS 38 as generally shown in Figure 2 and Figures 13A-13C.

In general the data processing system that is an implementation of the EMD Reconciliation Engine (ERE) 20 can be constructed to include one or more suitable computer hardware/software platforms, and can be embodied as a server or servers containing one or more data processors and associated memory storing computer software and data. The EMD Reconciliation Engine (ERE) 20 may be associated with, for example, a particular organization (e.g., a GDS) that handles travel inquiries and booking reservations for passenger airlines.

The exact implementation details and the construction of the computer system that implements the EMD Reconciliation Engine (ERE) 20 may take any number of suitable forms, and should not be construed as being limiting in any respect as to the implementation and practice of the exemplary embodiments of this invention. For example, the EMD Reconciliation Engine (ERE) 20 could be provided as a stand-alone system as shown in Figure 15 that is connected to external servers and systems via suitable wired or wireless data communication networks. Alternatively the EMD Reconciliation Engine (ERE) 20 could be co-located with and/or integrated with another existing server / system (e.g., with the Reservation system 40).

Based on the foregoing it should be apparent that the exemplary embodiments of this invention provide a method, apparatus and computer program(s) to keep travel data consistent between a first database of airline reservations storing passenger name records (PNR) comprised of services and a second database (EMD) comprised of travel coupons. The second database may be independently controlled by an EMD server.

Exemplary embodiments of the invention are summarized hereafter. These embodiments can each be used independently or in combination with at least another exemplary embodiment of the invention:
- searching comprises steps of:
   selecting orphan coupons and services eligible for reconciliation according to certain criteria;
   invalidating orphan services that would not maintain a chronological order of orphan coupons;
   removing orphan services not matching with city pairs of orphan coupons;
   removing orphan services not matching with a Service Code and Carrier of orphan coupons; and
   selecting among remaining candidate services one orphan coupon that is considered in chronological order.
- Selecting orphan coupons and services eligible for reconciliation according to certain criteria comprises:
   for selecting orphan PNR services, considering at least one of an airline code of the service (note the discussion above of the marketing carrier with respect to the 'airline code', which applies here as well) to determine if the airline has subscribed to a reconciliation service that implements the method; if an air segment associated with the service is not past-dated; if the air segment associated with the service is established with an E-Ticket coupon; if the service is eligible for EMD, if the service is not already established with an EMD coupon; and if the service status is Confirmed;
      and further comprises, for selecting orphan EMD coupons, considering at least one of whether an operating carrier of the coupon has subscribed to the reconciliation service that implements the method; if the coupon status is Open for Use ('O') or Airport control ('A'); if all subsequent coupons statuses are Open for Use ('O') or Airport control ('A') or Checked-In ('C'); if the coupon is not already established with a service in the PNR which status is Confirmed; and if the coupon is not established with a service in another PNR.
- For a case where there is only one considered candidate service for a current orphan coupon, the method further comprises:
   if the only one candidate service is the candidate of a single one coupon, selecting the only one candidate service;
   if not, searching for at least one other coupon that perfectly matches the current only one candidate service and, if a coupon is found that perfectly matches the current only one candidate service, selecting a first chronological perfectly matching coupon, else if a coupon is not found that perfectly matches the current only one candidate service, selecting a first chronological orphan coupon.
- selecting considers a plurality of candidate services for the current orphan coupon, and the method further comprises:
   if no other coupon is found to match, searching for another service perfectly matching the current coupon and, if another service is found to perfectly match the current coupon, selecting the perfectly matching service otherwise, if another service is not found to perfectly match the current coupon, selecting the first chronological orphan service;
   otherwise selecting the first chronological orphan service.
- receiving an image of the modified PNR receives the image from a first database, and where receiving an image of a corresponding EMD receives the image from a second database.
- The method comprises an initial step of determining if the modification to the PNR is a voluntary modification and, if it is, submitting a request to a Pricing Engine to analyze the modification against fare conditions to determine if the EMD coupon is eligible for the re-association.
- If the Pricing Engine determines that the modification can be achieved without a change in fare or without incurring a penalty fee, proceeding with the automatic reconciliation of the PNR, EMD and the E-Ticket, otherwise performing a manual reconciliation of the PNR, EMD and the E-Ticket.

### 21. Some Additional Embodiments of this Invention

Further embodiments of this invention provide for an automatic check of a new reference in a PNR, where the reference is with regard to an EMD or an E-Ticket. These embodiments provide a consistent process/algorithm that secures a manual reference of an E-Ticket or an EMD in a PNR. As will be made apparent below the use of these embodiments can prevent fraud, facilitate agent work flow and facilitate the departure control process.

While reference is generally made at times to a "manual" process, it should be appreciated that the process(es) are implemented in and with data processing systems and servers that are programmed so as to implement these additional embodiments of this invention.

In the following certain definitions can be considered as follows.

A Basic FHD can be considered as a reference of an EMD without guarantees.

A Basic FHE can be considered as an E-Ticket without guarantees.

An Enhanced FHD can be considered as an EMD manually entered that guarantees performance of a number of security checks to ensure a reliable link between a service and an EMD coupon.

An Enhanced FHE can be considered as an E-Ticket manually entered that guarantees performance of a number of security checks to ensure a reliable link between a flight segment and an E-Ticket coupon.

An FA element is a reference of an EMD or an E-Ticket that is automatically entered and that guarantees the usability of the EMD or E-Ticket coupon for a given service or flight segment.

A Marketing Carrier (MC) can be considered as an airline whose Airline Designator is recorded as the transporting carrier on electronic value coupon(s). The Marketing Carrier of an EMD-A coupon is the actual Marketing Carrier of the flight associated with the EMD coupon.

An Operating Carrier (OC) can be considered as a carrier used in a code share situation when different from the Marketing Carrier.

A RFIC is a Reason For Issuance Code, while a RFISC is a Reason For Issuance Sub Code.

A Service can be considered as a SSR or SVC element

An SSR (Special Service Request) is a PNR element that can represent a Service. An SSR for Services is always flight segment associated.

An SVC is a PNR segment that represents a Service. An SVC is not associated with a PNR flight segment. The SVC is a manual auxiliary segment.

A Validating carrier (VC) can be considered as an issuing airline whose numeric airline code precedes a document number.

### 22. Background for the Additional Embodiments of this Invention

In the context of security reinforcement, cost reductions and environment protection, electronic support for travel documents is an important factor. The use of Electronic Tickets (E-Tickets) and Electronic miscellaneous documents (EMD) that were discussed have become the industry standard documents record for flights and services.

The E-Ticket can be issued by the airline or travel agent once the passenger confirms and pays for the reservation. The E-Ticket is created based on the information of the reservation, such as the flight details (class, date, board point, etc...), the passenger name, form of payment, etc... Upon the issuance of the E-Ticket every flight segment in the reservation is said to be associated to an E-Ticket coupon.

Once issued the E-Ticket is stored on a separate database and it is controlled by a separate system, the ETS (Electronic Ticketing Server). Only the number of the E-Ticket is needed on the reservation image and if the agent needs the details of the E-Ticket the agent can retrieve it from the ETS. This is done through a query referred to as an "E-Ticket display request".

As a reminder, the EMD is the equivalent for Services (the E-Ticket is for flights). The EMD documents the sale and tracks usage of charges (e.g., residual value, excess baggage charges, miscellaneous services).

The EMD is basically a paperless solution. It is represented by a file created in the distribution system database to refer to the sale and contains a service code. The service code always qualified by a couple: "Reason For Issuance Code (RFIC) / Reason For Issuance Subcode (RFISC)".

As was discussed in detail above, two different types of EMD exist, the Associated EMD (EMD-A) and the standalone EMD (EMD-S).

Briefly, the Associated EMD (EMD-A) is a multiple coupons document, where each coupon is directly linked to an individual flight coupon of an E-Ticket. On the PNR side this corresponds to a service associated with a flight segment.

The stand-alone EMD (EMD-S) is not intrinsically linked to an E-Ticket. On the PNR side this corresponds to a service without a link to any flight segment.

The life of these documents relies on many interactions between the reservation platform linked to the PNR database, the ticketing platform linked to the EMD and E-Ticket databases, and end-users.

As part of their activities, airline or travel agents may need to reference to a new PNR the number of a previously issued and still open for use document (E-Ticket or EMD). This can be used as a payment reference for a new booking (flight or service), or as a support before starting other transactions (such as exchange, refund...).

Currently an agent can enter an E-Ticket number that does not match any flight segment in the PNR, or the agent can enter the same E-Ticket number in many PNRs.

Currently some basic checks can be done:
(a) the name in the PNR matches the name in an E-Ticket;
(b) an E-Ticket actually exists; and
(c) all of the coupons are not in final status.

For the EMD the same type of problems exists. For example, an agent can enter an EMD number that does not match any service in the PNR, or the agent can enter the same EMD number in many PNRs. There is currently no method by which the agent can see at a glance if the document can be directly used, or if the reference is not reliable and does not have any connection with the services present in the PNR.

Currently some basic checks can be done:
(a) the name in the PNR matches the name in the EMD;
(b) an EMD actually exists; and
(c) all of the coupons are not in final status.

Since no other checks are performed the conventional practice can result in an invalid EMD/E-Ticket reference as payment for a service or a flight segment. There are several undesirable consequences that can result from this lack of consistency, such as:
a loss of time at departure control since the agent cannot provide the service as long as the agent has not corrected the situation with the invalid EMD/E-Ticket reference; and/or
a loss of revenue if the agent interprets wrongly the reference of the EMD/E-Ticket as being usable when in fact the reference is not valid.

### 23. Overview of the Additional Embodiments of this Invention

The additional embodiments provide a process that ensures the security level of the manual reference of an E-Ticket or an EMD in a PNR, or that at least warns the agent in the case of a non-secured reference. This process applies to different cases and provides reliability for customers. This process can be used at different levels.

For example, for airline and travel agents the process provides an easier and more secure way to enter E-Ticket or EMD references. For airlines the process can eliminate at least some cases of fraud by use of a secured reference of the E-Ticket and EMD. In addition, the task of the DCS agent can be facilitated since no actions need to be done at DCS time in order to repair problems arising from the presence of invalid references. Further, from the customer's point of view the waiting time at DCS can be reduced due to the use of a simplified procedure.

### 24. Feature 1 of the Additional Embodiments: Protected EMD reference insertion

This feature provides Insurance for an airline user of the service that all EMD references impacting the airline will follow a secured process (defined below). Thus, if the airline is the validating carrier of the EMD, or the operating carrier, or the marketing carrier, or the owner of the office where the entry is performed, the system always relies on this secured process.

A definition of a secured process can be when a reference of an EMD is manually entered by an agent, with coupon and service information. This process is flexible and provides different levels of security and checks, depending on the needs of the airline. A goal is to block any reference of an EMD when the coupon of the EMD does not fully match the service of the PNR. Several criteria can be used to define a "full match" as explained below. If the EMD coupon that is referenced and the service don't fully match, the airline agent is given the possibility to allow the reference for informational purposes when there is a minimum of compatibility by using an override option.

An aspect of this first feature is the definition of an algorithm that searches for a match between the service and an EMD coupon, in the case where the agent does not give the coupon information.

### 25. Feature 2 of the Additional Embodiments: Protected E-Ticket reference insertion

This feature provides an assurance for an airline user of the service that all E-Ticket references impacting the airline follow a secured process (defined below). Thus, if the airline is the validating carrier of the E-Ticket, or is the operating carrier, or is the marketing carrier, or is the owner of the office where the entry is performed, the system always relies on the secured process.

A definition of a secured process can be when a reference of an E-Ticket is manually entered, with the coupon and flight segment information. This process is flexible and it provides different levels of security and checks, depending on the needs of the airline. The goal is to block any reference of an E-Ticket when the coupon of the E-Ticket does not fully match the flight segment of the PNR. Several criteria define a "full match" and are detailed below. If the E-Ticket coupon that is referenced and the flight segment don't fully match, the airline agent will have the possibility to allow the reference for informational purposes when there is a minimum of compatibility by using an override option.

### 26. More Detailed Explanation of Feature 1 of the Additional Embodiments (Protected EMD reference insertion)

Discussed first is the concept of Subscription. Every airline subscribing to the protected EMD reference service in accordance with the additional embodiments of this invention has the assurance that a secured process will be followed as soon as it is impacted by the reference.

When a reference to an EMD is manually entered in a PNR, the process ensures that for the airline client (subscriber) of the service, as the owner of the office or as the validating carrier (VC) of the EMD or as the marketing carrier (MC) or as the operating carrier (OC) of the EMD, the secured process will take place. The following process is systematically used.

In the case of the manual entry of an EMD reference in a PNR, the secured process may be referred to for convenience and not as a limitation as an "Enhanced FHD process" and the non-secured process (actual process) may be referred to for convenience and not as a limitation as a "Basic FHD process".

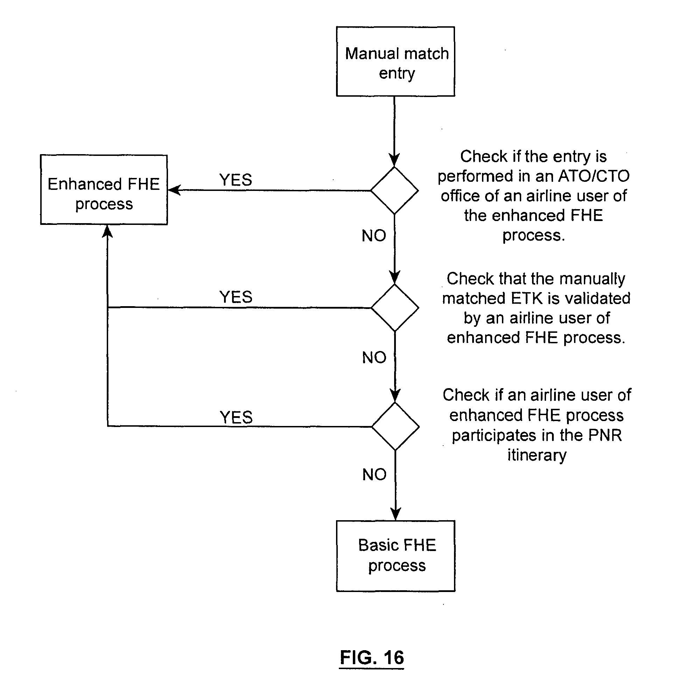

Figure 16 presents an exemplary logic flow diagram that depicts a trigger for the occurrence of the enhanced FHD process in accordance with the further embodiments of this invention.

Provided now is an overall description that highlights the flexibility of the Enhanced FHD process. The Enhanced FHD process is flexible in that it provides different levels of security depending on the needs of the airline. For an airline subscribing to the Enhanced FHD process the agent may have two process choices: enter the EMD service/coupon link, or enter the service only (FHD/S).
(A) When entering the EMD service/coupon link that the agent wishes to create (FHD/S/C) several checks are applied to guarantee the validity of the link provided between the service and the EMD coupon. This implies that the service could be used with the EMD coupon (the checks are described in further detail below).
(B) When entering the service only (FHD/S) the system searches using several criteria (described below) for a matching EMD coupon in the EMD referenced that will match the service.

Each airline (each subscriber) is enabled to define different a level of rights for agents in order to give them the possibility of using both of the foregoing two processes or only one of them.

In the case of a failure checks are made to determine if coupon/service is provided, or if no matching EMD coupon is found if the service only is provided. The highly secured reference to the EMD (the enhanced FHD) will be either rejected, or the system will default to a simple reference (referred to hereafter as the "basic FHD") with a status of "failed", according to the needs of the airline.

The agent, depending on the rights granted to the agent, has the possibility to force the entry. As discussed in detail below, in that situation the enhanced FHD will have a status "unchecked" to show the agent that it is not guaranteed.

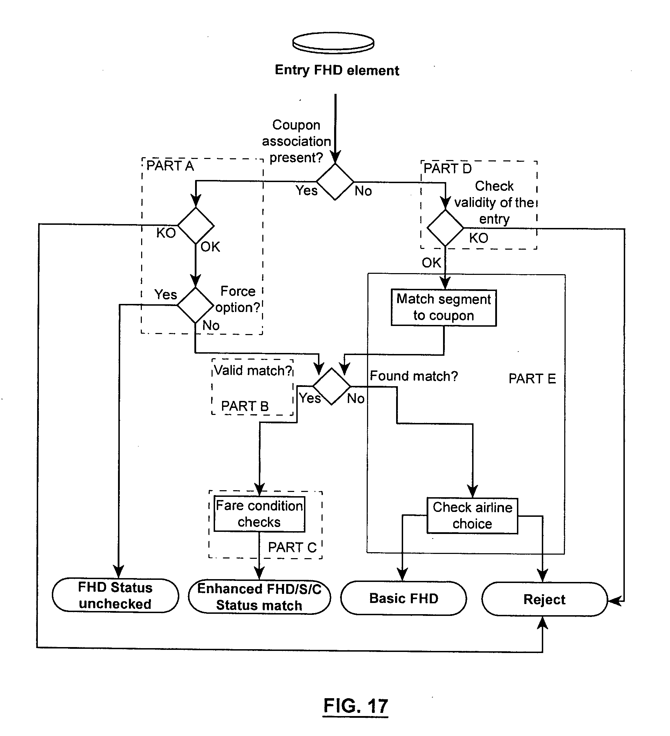

Described now is the manual entry to reference an EMD in a PNR with coupon/segment association. Reference can be made to Figure 17 for showing a global view of the process. The various portions or phases A-E of the process are described separately below.

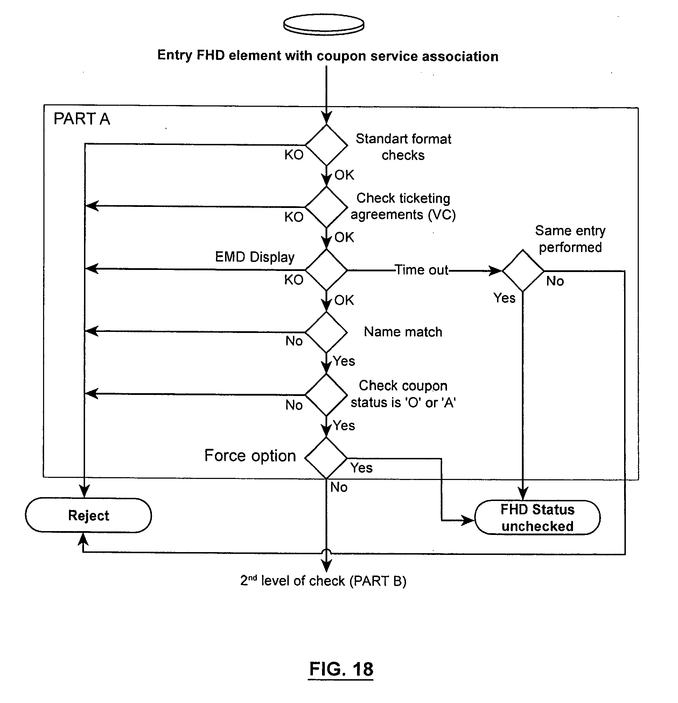

Phase A- Some basic checks are systematically performed (reference can also be made to Figure 18). If these checks are not successful, the request is rejected, even in the case of a force option. The basic checks can include, but are not limited to, the following:
Format matches: the entry should comply with the format defined.
Ticketing agreements with VC: If the entry is done from a travel agent, the validating carrier must be an eligible E-Ticket carrier for the office.

The system performs an EMD display, if the response is OK the process continues, while if the display fails the request is rejected. In a case of time out, the end user can override the EMD display verification by repeating the FHD (immediately, without any other entry before) with the same EMD number.

Name check: The same name is used in the PNR and in the EMD document.

The status of the coupon is not open ('O') or airport control ('A')

The process then checks if the force option is used. The force option is preferably only available for an agent with a high level of rights. If the force option is used the next checks are bypassed and the system defaults to a FHD "unchecked". If the force option is not used the process continues.

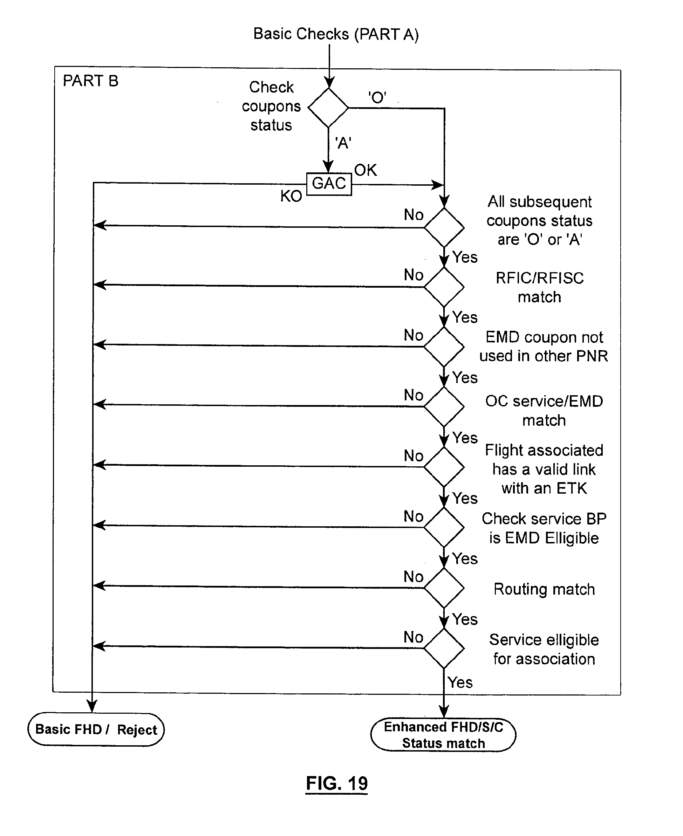

The process then enters Phase B for performing a second level of checks (reference can also be made to Figure 19 that shows a non-limiting example of a flow of checks during Phase B).

If one of the following checks fails the airline can choose if:
(a) the process defaults to a simple reference, the "basic FHD", and in that case the reference is given for information purpose only, but there is no guarantee of its usability, or
(b) the entry is rejected.

If all of the checks are successful the process creates a highly secured reference to the EMD, (Enhanced FHD element), which is a guarantee of a match between the service and the EMD coupon involved. The service and the associated EMD coupon are explicitly given.

In Phase B all checks are optional and can be organized following the priority (needs) of the airline.

The further checks can include all of some of the following examples:
(a) Check EMD coupon status
   Status 'O' => next check
   Status 'A' : If the control of the coupon is not open in the database of the airline from where the entry is done, it should first obtain the control of the coupon using a Get Airport Control (GAC).
   GAC fails => reject or basic FHD
   GAC OK => next check
(b) All subsequent coupons status should be 'O' or 'A' or 'C', to ensure the sequence security.
(c) The RFIC/RFISC of the service should be the same as that of the RFIC/RFISC of the EMD coupon.
(d) The coupon of the EMD is not used in another PNR.
(e) The Operating carrier (OC) of the service matches the Operating carrier of the EMD coupon.
(f) If the document is an EMD-A, the flight segment associated with the service provided should have a valid established link with an E-Ticket.
(g) For an EMD-A, the board point (BP) of the service should be EMD eligible.
(h) For all EMD-A and for EMD-S with routing mandatory, the routing should match between the service and the EMD coupon.
(i) The service involved is eligible for association: the system checks that the service does not already match a coupon. For each service, the system checks that:
   It is not linked to an EMD coupon via any reference in PNR;

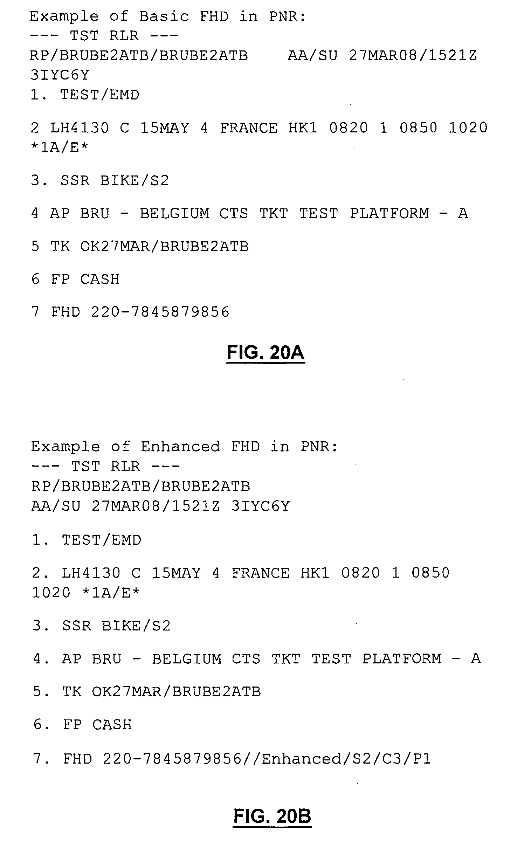

The flight associated with the service has not already been flown (only applicable in case of service associated to a flight segment). Figure 20A shows an example of a Basic FHD in a PNR, while Figure 20B shows an example of an Enhanced FHD in a PNR.

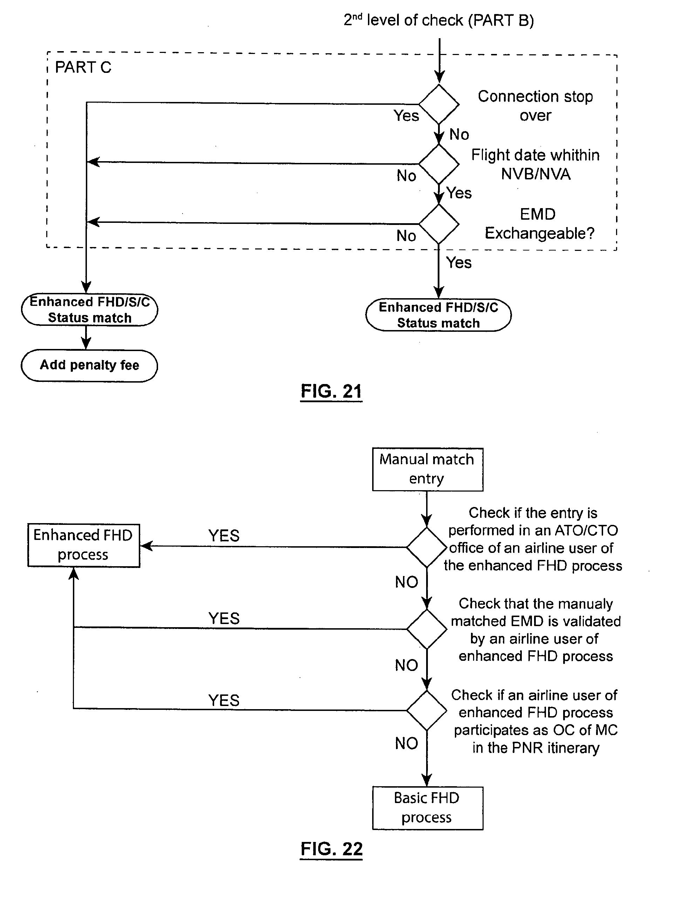

The process then enters Phase C for performing Fare Condition checks (third level checks, reference can also be made to Figure 21).

The Enhanced FHD provides a guarantee of consistency between an EMD coupon and a service. However, at this stage of the process no fare conditions have been yet taken into account.

Further in accordance with these embodiments the airline has the possibility to require an Enhanced FHD with revenue integrity checks including, for example:
(a) connection stop over: the period of time between connections are in a window defined by the airline, to ensure that the connection is not changed into a stop;
(b) flight date within NVB/NVA: to ensure that conditions of pricing are still applicable; and
(c) the EMD is exchangeable.

If those checks are not successful, the agent will be advised that a (fare) penalty may be needed:

Discussed now with reference to Phase D of Figure 17 is a process for manual entry to reference an EMD in a PNR without coupon information. Assume a case where a check of the validity of data is provided. If there are no ticketing agreements between an office and a VC of the EMD, the process simply terminates.

Otherwise, for each service provided the system checks that:
(a) the service is eligible for matching, where a service is eligible for matching if it satisfies the following exemplary conditions:
   it is not associated with an EMD coupon via any reference; and the associated flight should not be "flown" (applicable in the case of a service associated with a flight segment);
(b) the status of the service is confirmed;
(c) the Board Point of the service is EMD eligible;
(d) the EMD provided exists in a database; and
(e) there is a name match between the EMD and the PNR.

Discussed now with reference to Phase E of Figure 17 is a search for eligible coupons for matching. During the processing of this Phase the system determines a list of eligible EMD coupons. An eligible coupon may be assumed to satisfy these conditions:
(a) it does not match any service via any reference in the PNR, or it is already associated to a cancelled service in PNR;
(b) the coupon is not used in another PNR;
(c) the status of the coupon is either 'O' or 'A', where if the status is 'A', the system attempts to regain control of the coupon.

Discussed now is a search for matches between eligible services and eligible coupons. If the EMD type is 'A', the process builds a first list of candidate services for each coupon by:
(a) finding a first preceding EMD coupon that is associated to a service; and
(b) finding a first following EMD coupon that is associated to a service. The initial list of candidate services for this eligible coupon is the list of services strictly between these two services.

If the EMD type is 'S', the previous action is not performed.

The process of matching includes:
(a) matching coupons to services with the same RFIC/RFISC; and
(b) matching coupons to services with the same routing if EMD-A or EMD-S with routing mandatory.

For each coupon, the process determines among the previous list the services that have same RFIC/RFISC. The result is a list of same RFIC/RFISC services. If the list is empty, process terminates.

A coupon and a service that have the same city pair are matched. The result is a list of candidate services for each coupon (this step is skipped for EMD-S without routing). If the list is empty, process terminates.

The process then selects one candidate service for each coupon, where
if the coupon has only one candidate service and
if this service is the candidate of only one coupon, it is selected;
else
if the EMD type is 'A', the process searches to determine if the flight segment associated with the candidate service is associated with an E-Ticket coupon in connection with one of the EMD coupon candidates. If found, this coupon is selected for the service, while if not found the first chronological coupon is selected. If the EMD type is 'S', the first chronological coupon of the list is selected.

If the coupon has several service candidates and if no other coupon's routing matches with any of the candidates' services, the process searches to determine if the flight segment associated with a candidate service is associated with a E-Ticket coupon in connection with this EMD coupon. If found, this service is selected, while if not found the first chronological service is selected, else, the first chronological service is selected.

If the entry is rejected, the agent has the possibility to specify a coupon and service association to return back to the previous flow.

A further component of this process involves fare condition checks. Once the association of the coupon/service has been performed at least some fare conditions checks are performed as discussed above with respect to Phase C and Figure 21. This results in an enhanced FHD that will reference an EMD usable as it is, or needing a penalty.

Discussed now in further detail is the previously described EMD re-association process. At the end of a transaction, when the PNR contains an enhanced FHD, an automatic process is launched to attempt to make the given EMD coupons usable without requiring additional checks by DCS agents. This EMD re-association process includes:
(a) a check that fare conditions are still valid, and the addition of a penalty fee element in a case where they are not;
(b) insertion of an element containing a date of transaction and fare data (that may be called an FA element); and
(c) association of the EMD-A and the E-Ticket by sending an association message to the EMD server and to the E-Ticket server.

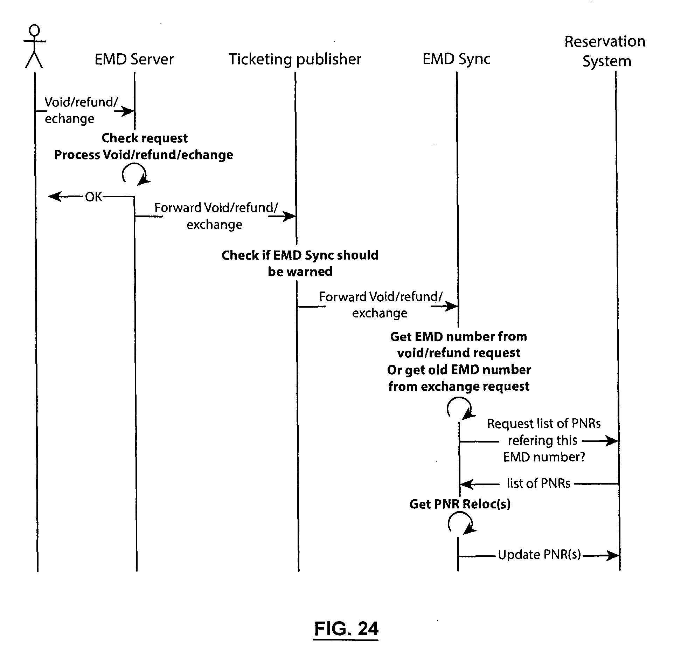

Before describing the second feature of the additional embodiments of this invention (protected E-Ticket reference insertion), reference can be made to Figure 24 that depicts a flow diagram providing an overall technical description of the EMD reference update.

### 27. More Detailed Explanation of Feature 2 of the Additional Embodiments (Protected E-Ticket Reference Insertion)

Discussed first is the Subscription. Every airline subscribing to the protected E-Ticket reference service is assured of having a secure process to follow as soon as it is impacted by the reference. When a reference to an E-Ticket is manually entered in a PNR, the process ensures that for an airline client of this service, as owner of the office, or as validating carrier (VC) of the E-Ticket, or as marketing carrier (MC) or operating carrier (OC) of the E-Ticket, the secured process will take place. The following process is systematically used.

In the case of manual entry of an E-Ticket reference in a PNR the secured process can be referred to for convenience as an "Enhanced FHE process", and the non-secured process (actual process) can be referred to as a "Basic FHE process".

Figure 22 is an exemplary logic flow diagram that depicts a trigger for the Enhanced FHE Process in accordance with the further embodiments of this invention.

A Process description of this additional embodiment will now be provided. As for the previous feature the process is flexible and can be adapted to the needs of the airline. The same options as with the previous process (FHD) can be offered. It is possible to enter the flight segment/coupon association, or only provide the flight segment and allow the process to find a matching coupon. It is also possible to force the process (depending on the level of rights of the agent).

Described now is manual entry to reference an E-Ticket in a PNR with coupon/segment association.

### A- Basic Checks are Systematically Performed

If these checks are not successful, the request is rejected, even in the case of the force option. This includes:
(a) Format matches: the entry should comply with the format defined.
(b) Ticketing agreements with VC: If the entry is made by a travel agent, the validating carrier must be an eligible E-Ticket carrier for the market where the Travel Agency is located.
(c) The system performs an E-Ticket display. If the response is OK, the process continues, while if the display fails the request is rejected. In the case of a time out the end user can override the E-Ticket display verification by repeating the FHE (immediately, without any other entry before) with the same E-Ticket number.
(d) Name check: The same name should be used in the PNR and in the E-Ticket.
(e) The status of the coupon is not open ('O') or airport control ('A').

The process then checks if the force option is used. As was noted above the force option is only available for use by an agent with a high level of rights. If the force option is used, the next checks are bypassed and the system defaults to a FHE "unchecked". If the force option is not used the process continues.

### B- The Process enters the Phase of Second Level Checks:

If one of the following checks fails the airline can choose if the process defaults to a simple reference, the "basic FHE". In this case the reference is given for information purpose only, but there is no guarantee of its usability. If one of the following checks fails the airline can choose to simply reject the entry.

If all of the checks are successful, the process creates a highly secured reference to the E-Ticket (the Enhanced FHE element), which is a guarantee of matching between the flight segment and the E-Ticket coupon involved.

In this phase all checks are optional and can be organized following the priorities of the airline.

The airline can also choose to accept an enhanced FHE, with a divergence flag set, even if some specific checks have failed. For example, if OC, Board Point and Off Point match, but the flight number is not the same, the enhanced FHE could be accepted.

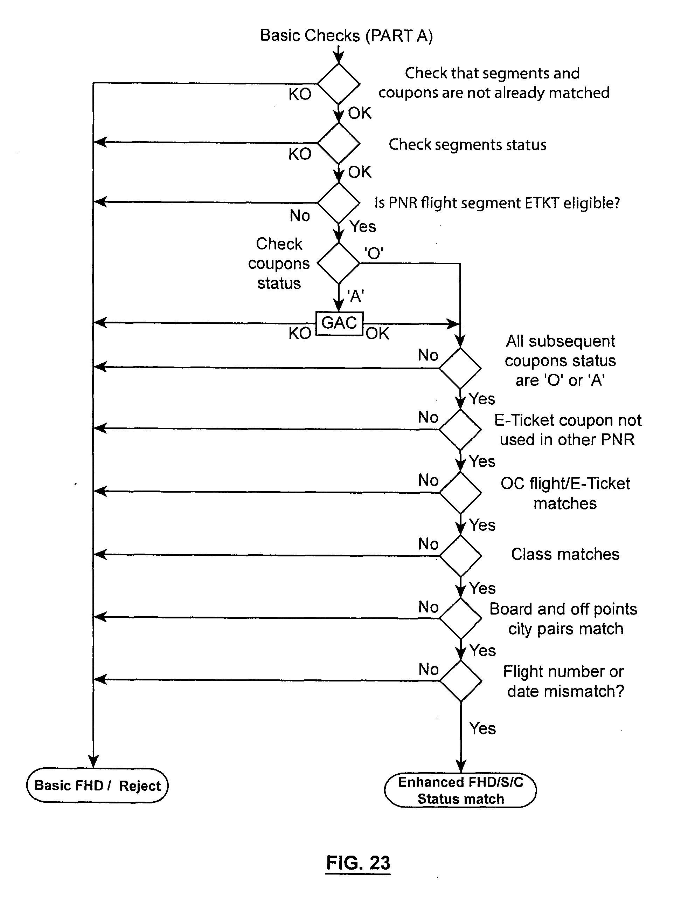

What follows is a list of non-limiting examples of (second level) checks that can be performed. Reference can also be made to Figure 23. The exemplary checks can include:
(a) a check that coupons and segments are not already matched. This can involve checking that none of the segments are already associated with a coupon via any ticket element, and that none of the coupons are already associated with a segment via any ticket.
(b) a check that none of the segments are flown (FLWN) or cancelled (HX, UN, UC or NO advice codes).
(c) a check that all the associated segments are E-Ticket eligible, according to the issuance criteria.
(d) a check of the E-Ticket coupon status:
   Status 'O' => next check
   Status 'A' : If the control of the coupon is not open in the database of the airline from where the entry is done, it should first obtain the control of the coupon (using the Get Airport Control (GAC)). If GAC fails => reject or basic FHE, else if GAC OK => next check.
(e) a check that all subsequent coupons status should be 'O' or 'A' or 'C' , to ensure the sequence security.
(f) a check that the coupon is free of association across all PNRs - or set to the current PNR Record Locator.
(g) a check that there is an Operating Carrier (OC) match between the flight segment and the E-Ticket coupon.
(h) a check that the booking class between the segment and its coupon match.
(i) a check that the board city and off city between the segment and its coupon match.
(j) a check that the departure date and/or flight number match. If the coupon is an open coupon (in the sense that flight number and/or date is missing, not to be confused with Open for Use), the system can accept the association while setting the Divergence Flag.

Discussed now are Fare condition checks. The Enhanced FHE provides a guarantee of consistency between an E-Ticket coupon and a flight segment. However, at this stage of the process no fare conditions have been yet taken into account.

An airline is enabled to require an Enhanced FHE with revenue integrity checks, including:
(a) a connection stop over: the period of time between connections are in a window defined by the airline to ensure that the connection is not changed into a stop;
(b) the flight date is within NVB/NVA to ensure that conditions of pricing are still applicable;
(c) the price is within a range of acceptation. A call to an automatic pricing system can be done to ensure that the price of the E-Ticket coupon corresponds to the actual price of the flight segment.

If these checks are not successful the agent is advised that a penalty may be needed.

Discussed now is a manual entry to reference an E-Ticket in a PNR without coupon information.

A phase of this process is to check the validity of data provided. If there are no ticketing agreements between the office and the VC of the E-Ticket, the process is terminated.

For each flight segment that is provided the system checks that:
(a) the segment is eligible for matching. This entails checking that a segment is eligible if it satisfies these conditions:
   it is not associated with an E-Ticket coupon via any reference; and
   the status of this segment is not flown (FLWN) or cancelled (HX, UN, UC or NO advice codes).
(b) the E-Ticket provided exists in the E-Ticket database; and
(c) there is a name match between the E-Ticket and the PNR.

A further phase of this process is to search for eligible coupons for matching. The system determines the list of eligible E-Ticket coupons. An eligible coupon satisfies these conditions:
(a) it does not match a flight segment via any reference in a PNR, or it is already associated with a cancelled segment in a PNR;
(b) the coupon is not used in another PNR;
(c) the status of the coupon is either 'O' or 'A', where if the status is 'A', the system attempts to regain control of the coupon.

A further phase of this process is to search for matches between eligible flight segments and eligible E-Ticket coupons. The process builds a first list of candidate segments for each coupon by:
(a) finding a first preceding E-Ticket coupon that is associated with a segment; and
(b) finding a first following coupon that is associated with a segment. The initial list of candidate segments for this eligible coupon is then the list of services strictly between these two services.

The process of matching entails the following sub-processes:
(a) for each coupon, the process determines among the previous list the segments that have the same routing. The result is a list of same-routing segments. If the list is empty the process terminates.
(b) a coupon and a segment that have the operating carrier are matched. The result is a list of candidate segments for each coupon. If the list is empty the process terminates.
(c) the process selects one candidate service for each coupon:
   if the coupon has only one candidate segment and:
      if this segment is the candidate of only one coupon, it is selected;
      else
      the process searches among the remaining segments for a candidate with same flight number, departure date and booking class (the airline can determine if this matching is required or is optional).
(d) if the coupon has several segment candidates, the first chronological segment is selected.

If the entry is rejected, the agent has the possibility to specify a coupon and a segment association to return to the previous process flow.

A further phase of this process is to make fare condition checks. Once the association of the coupon/segment has been performed some fare condition checks are performed as discussed above with respect to Phase C and Figure 21. This results in an enhanced FHE that references an E-Ticket usable as is, or one that may need a penalty.

A further phase of this process is an E-Ticket re-association process. At the end of the transaction, when the PNR contains an enhanced FHE, an automatic process is launched to attempt to make selected E-Ticket coupons usable without requiring additional checks by DCS agents. This process includes:
(a) a check that fare conditions are still valid, where a penalty fee element can be added if appropriate; and
(b) inserting an element containing the date of transaction and fare data.

As should be appreciated, these additional embodiments of this invention provide a number of advantages, technical effects, improvements and advancements over the conventional techniques. During the process of secured manual reference of the EMD or the E-Ticket in a PNR these additional embodiments beneficially provide for a different level of reference to be allowed as dictated by a subscriber (e.g., an airline) corresponding to different level of security.

Furthermore, these additional embodiments also beneficially provide an ability to manually enter into the automated system a reference of an EMD or an E-Ticket with a link service/EMD coupon or flight segment/E-Ticket coupon.

Furthermore, these additional embodiments also beneficially provide an ability to establish a highly secured sequence of checks to validate the reliability of the link EMD coupon-service or E-Ticket coupon-flight segment.

Furthermore, these additional embodiments also beneficially provide an ability to make available information of a record locator at the coupon level in order to define a reliable link between a service and an EMD coupon or a flight segment and an E-Ticket coupon.

Furthermore, these additional embodiments also beneficially provide an algorithm to determine a match between a provided service and a coupon of the provided EMD, in a case where there is no coupon specified in the entry

Furthermore, these additional embodiments also beneficially provide an algorithm to determine a match between a given flight segment and a coupon of the provided E-Ticket, in a case where there is no coupon specified in the entry

The use of these additional exemplary embodiments of this invention are also beneficial in limiting fraud, reducing the workload of an airline and a travel agent, and also reducing time delays for passengers at DCS.

In accordance with an aspect of the operation of this invention an agent enters manually a reference of an EMD (respectively E-Ticket) coupon that does not match a service (respectively flight segment) of the PNR, and the system automatically rejects the manually inserted reference.

In accordance with a further aspect of the operation of this invention an agent enters a reference of an EMD (respectively E-Ticket) without a coupon/service (respectively coupon/flight segment) link, and the system automatically establishes an association.

In general, the various exemplary embodiments may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the exemplary embodiments of this invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof. A computer program, such as the computer program(s) described above, can be written in any form of programming language, including compiled or interpreted languages, and can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Processors suitable for the execution of a computer program include, by way of example, both general and special purpose microprocessors, and any one or more processors of any kind of digital computer. Generally, a processor will receive instructions and data from a read-only memory or a random access memory or both. Elements of a computer may include at least one processor for executing instructions and one or more memory devices for storing instructions and data. Generally, a computer also may include, or be operatively coupled to receive data from or transfer data to, or both, one or more mass storage devices for storing data, e.g., magnetic, magneto-optical disks, or optical disks.

Various modifications and adaptations to the foregoing exemplary embodiments of this invention may become apparent to those skilled in the relevant arts in view of the foregoing description, when read in conjunction with the accompanying drawings. However, any and all modifications will still fall within the scope of the non-limiting and exemplary embodiments of this invention.

Further, the various names used for the described parameters, images, IATA codes, data structures and the like (e.g., PNR, ETS, EMD, Link Matrix, etc.) are not intended to be limiting in any respect, as these parameters, images, codes data structures, etc. may be identified by any suitable names. Further, the processes and algorithms that manipulate these parameters, images, data structures and the like may differ from those expressly disclosed herein.

Furthermore, some of the features of the various non-limiting and exemplary embodiments of this invention may be used to advantage without the corresponding use of other features. As such, the foregoing description should be considered as merely illustrative of the principles, teachings and exemplary embodiments of this invention, and not in limitation thereof.

## Claims

1. A computer implemented method to process travel-related documents, **characterized by** the fact it comprises:
in response to an event that results in a modification of a Passenger Name Record (PNR), receiving an image of the modified PNR;
Requesting and receiving an image of a corresponding Electronic Miscellaneous Documents (EMD);
establishing a matrix of links between PNR services and EMD coupons;
searching for matches between orphan PNR services and orphan EMD coupons;
automatically Reconciling the PNR, EMD and an Electronic Ticket (E-Ticket) by Re-associating orphan PNR services with matching EMD coupons and an EMD coupon with a corresponding E-Ticket coupon; and
disassociating any unmatched EMD coupons from an associated E-Ticket coupon.

2. The method as in claim 1, where the event is comprised of one of a service booking, or an EMD document reference, or an E-Ticket reference being one of updated, added or deleted in the PNR.

3. The method as in claim 1 or 2, where searching comprises steps of:
selecting orphan coupons and services eligible for reconciliation according to certain criteria;
invalidating orphan services that would not maintain a chronological order of orphan coupons;
removing orphan services not matching with city pairs of orphan coupons;
removing orphan services not matching with a Service Code and Carrier of orphan coupons; and
selecting among remaining candidate services one orphan coupon that is considered in chronological order.

4. The method of claim 3, where selecting orphan coupons and services eligible for reconciliation according to certain criteria comprises:
for selecting orphan PNR services, considering at least one of a code of an airline involved with the service to determine if the airline has subscribed to a reconciliation service that implements the method; if an air segment associated with the service is not past-dated; if the air segment associated with the service is established with an E-Ticket coupon; if the service is eligible for EMD, if the service is not already established with an EMD coupon; and if the service status is Confirmed;
and further comprises, for selecting orphan EMD coupons, considering at least one of whether an operating carrier of the coupon has subscribed to the reconciliation service that implements the method; if the coupon status is Open for Use ('O') or Airport control ('A'); if all subsequent coupons statuses are Open for Use ('O') or Airport control ('A') or Checked-In('C'); if the coupon is not already established with a service in the PNR which status is Confirmed; and if the coupon is not established with a service in another PNR.

5. The method of claim 3 or 4, where for a case where there is only one considered candidate service for a current orphan coupon, further comprising:
if the only one candidate service is the candidate of a single one coupon, selecting the only one candidate service;
if not, searching for at least one other coupon that perfectly matches the current only one candidate service and, if a coupon is found that perfectly matches the current only one candidate service, selecting a first chronological perfectly matching coupon, else if a coupon is not found that perfectly matches the current only one candidate service, selecting a first chronological orphan coupon.

6. The method of claim 3 or 4, where selecting considers a plurality of candidate services for the current orphan coupon, further comprising:
if no other coupon is found to match, searching for another service perfectly matching the current coupon and, if another service is found to perfectly match the current coupon, selecting the perfectly matching service otherwise, if another service is not found to perfectly match the current coupon, selecting the first chronological orphan service;
otherwise selecting the first chronological orphan service.

7. The method of any of claims 1 to 6, where receiving an image of the modified PNR receives the image from a first database, and where receiving an image of a corresponding EMD receives the image from a second database.

8. The method of any of claims 1 to 7, comprising an initial step of determining if the modification to the PNR is a voluntary modification and, if it is, submitting a request to a Pricing Engine to analyze the modification against fare conditions to determine if the EMD coupon is eligible for the Reassociation.

9. The method as in claim 8, where if the Pricing Engine determines that the modification can be achieved without a change in fare or without incurring a penalty fee, proceeding with the automatic reconciliation of the PNR, EMD and the E-Ticket, otherwise performing a manual reconciliation of the PNR, EMD and the E-Ticket.

10. The method as in any one of claims 1-9, further comprising automatically responding to one or both of a manually entered EMD reference and a manually entered E-Ticket reference to check a validity of the reference and to examine a corresponding PNR to locate a match.

11. A non-transitory computer-readable medium that contains software program instructions, where execution of the software program instructions by at least one data processor results in performance of operations that comprise execution of the method of any one of claims 1-10.

12. A data processing system comprising:
at least one processor; and **characterized by** the fact it comprises
at least memory storing computer program code, where the memory and computer program code are configured to, with the at last one processor, cause the data processing system to respond to an event that results in a modification of a Passenger Name Record (PNR) by receiving an image of the modified PNR and receiving an image of a corresponding Electronic Miscellaneous Documents (EMD); to establish a matrix of links between PNR services and EMD coupons; to search for matches between orphan PNR services and orphan EMD coupons; to automatically Reconcile the PNR, EMD and an Electronic Ticket (E-Ticket) by Re-associating orphan PNR services with matching EMD coupons and an EMD coupon with a corresponding E-Ticket coupon; and to Disassociate any unmatched EMD coupons from an associated E-Ticket coupon.

13. The data processing system of claim 12 wherein the memory and computer program code are configured, with the at least one processor, to cause the data processing system to operate the method of any of claims 1 to 10.

14. A system to perform an Electronic Miscellaneous Documents (EMD) reconciliation service (ERS) **characterized in that** it comprises:
a Publisher configured to forward images of passenger name records (PNR);
an EMD server configured to send EMD images and to re-associate or disassociate EMD coupons with E-Ticket coupons;
a Pricing Engine configured to compute if an EMD coupon is eligible to automatic reassociation according initial pricing conditions;
an EMD reconciliation system (ERS) configured to receive the PNR images, request and receive the EMD images from the EMD server, match PNR services with EMD coupons using a link matrix, automatically Re-associate orphan PNR services with matching EMD coupon and automatically Re-associate matching EMD coupons with corresponding E-Ticket coupons, and automatically Dis-associate unmatched EMD coupons from associated E-Ticket coupons.

15. The system as in claim 14 where said EMD reconciliation system (ERS) is further configured to request computation of possible penalty fees or fare differences.
